# EUROPÄISCHE PATENTSCHRIFT

(11) **EP 2 651 666 B1**
(45) Veröffentlichungstag und Bekanntmachung des Hinweises auf die Patenterteilung: **23.05.2018**
(21) Anmeldenummer: 11787615.1
(22) Anmeldetag: 22.11.2011
(51) Int. Cl.: B60G 11/27, B60G 17/015, B60G 17/018, B60G 17/052

(54) **LUFTFEDERANLAGE, PNEUMATISCHES SYSTEM UND FAHRZEUG MIT EINER LUFTFEDERANLAGE UND EIN VERFAHREN ZUM BETRIEB EINER PNEUMATIKANLAGE DER LUFTFEDERANLAGE**
AIR SPRING EQUIPMENT, PNEUMATIC SYSTEM AND VEHICLE WITH AIR SPRING EQUIPMENT AND METHOD OF OPERATING THE PNEUMATIC EQUIPMENT OF THE AIR SPRING INSTALLATION
SUSPENSION D'AIR, SYSTÈME PNEUMATIQUE ET VEHICULE AVEC SUSPENSION D'AIR ET PROCÉDÉ DE FONCTIONNEMENT DE L'ÉQUIPEMENT PNEUMATIQUES DU SUSPENSION D'AIR

(30) Priorität: 16.12.2010 DE 102010054703
(43) Veröffentlichungstag der Anmeldung: 23.10.2013
(73) Patentinhaber: WABCO GmbH, 30453 Hannover (DE)
(72) Erfinder: FRANK, Dieter, 30171 Hannover (DE); MEIER, Jörg, 31840 Hessisch Oldendorf (DE); MEISSNER, Frank, 30453 Hannover (DE)
(74) Vertreter: Lauerwald, Jörg
(86) Internationale Anmeldenummer: PCT/EP2011/005861
(87) Internationale Veröffentlichungsnummer: WO 2012/079686

(56) Entgegenhaltungen:
- EP-A2- 1 216 860
- DE-A1- 2 016 030
- DE-A1- 3 501 708
- DE-A1- 4 327 763
- DE-A1- 4 327 764
- DE-A1- 10 223 405
- DE-A1-102006 041 010

## Beschreibung

Luftfederanlage, pneumatisches System und Fahrzeug mit einer Luftfederanlage und ein Verfahren zum Betrieb einer Pneumatikanlage der Luftfederanlage.
Die Erfindung betrifft eine Luftfederanlage für ein Fahrzeug gemäß dem Oberbegriff des Anspruchs 1. Die Erfindung betrifft auch ein Fahrzeug, wie ein Personenfahrzeug oder ein Nutzfahrzeug mit wenigstens zwei Achsen und mit einer Luftfederanlage gemäß Anspruch 13. Weiter betrifft die Erfindung ein Verfahren gemäß dem Oberbegriff des Anspruchs 14.
Ein beispielsweise in EP 1 165 333 B2 offenbartes pneumatisches System der eingangs genannten Art wird in Fahrzeugen aller Art eingesetzt. Ein pneumatisches System dieser Art dient der Federung und ggf. auch zur Niveauregelung bei einem Fahrzeug, so dass der Abstand zwischen Fahrzeugachse und Fahrzeugaufbau eingestellt werden kann. Eine Luftfederanlage der eingangs genannten Art umfasst eine Anzahl von jeweils als Druckkammer für eine Luftfeder dienende Bälge, die mit zunehmender Befüllung den Fahrzeugaufbau anheben und mit abnehmender Belüftung absenken können. Mit wachsendem Abstand zwischen Fahrzeugachse und Fahrzeugaufbau bzw. Bodenfreiheit werden die Federwege länger und auch größere Bodenunebenheiten können überwunden werden, ohne dass es zu einer Berührung mit dem Fahrzeugaufbau kommt. Solche pneumatischen Systeme werden in Geländefahrzeugen und Sport Utility Vehicles (SUV) eingesetzt. Insbesondere bei SUVs ist es bei sehr leistungsfähigen Motoren wünschenswert, das Fahrzeug einerseits für hohe Geschwindigkeiten auf der Straße mit vergleichsweise geringer Bodenfreiheit zu versehen und andererseits für das Gelände mit einer vergleichsweise großen Bodenfreiheit zu versehen. Es ist weiter wünschenswert, eine Veränderung der Bodenfreiheit möglichst schnell umzusetzen, was die Anforderung hinsichtlich Schnelligkeit, Flexibilität und Verlässlichkeit eines pneumatischen Systems mit einer Luftfederanlage erhöht.

Die DE4327763A1 beschreibt eine Luftfederungsanlage eines Fahrzeugs mit einer Druckluftversorgungseinrichtung, einer Ventileinrichtung zum Be- und Entlüften von der Ventileinrichtung nachgeordneten, an Fahrzeugachsen angeordneten, einen Wagenkasten tragenden Luftfederbälgen, sowie Weggebern zum Sensieren der Höhe zwischen dem Wagenkasten und den Fahrzeugachsen, wobei mindestens eine erste Wagenkastenecke des Wagenkastens auf ein von einem Weggeber sensiertes, dieser Wagenkastenecke zugeordnetes, vorgegebenes Kneeling-Niveau absenkbar ist durch Entlüften eines diese Wagenkastenecke tragenden ersten Luftfederbalgs, wobei das Kneeling-Niveau höher liegt als eine durch einen mechanischen Anschlag gegebene niedrigste Höhe der Wagenkastenecke.

Die DE4327764A1 beschreibt eine Luftfederungsanlage für Fahrzeuge, mit mindestens einem zwischen einer Achse und einem Fahrzeugaufbau des Fahrzeugs angeordneten Luftfederbalg, mit einer Druckluftbeschaffungseinrichtung, mit mindestens einer, mindestens einen mit dem mindestens einen Luftfederbalg verbundenen veränderbaren Ventilquerschnitt überwachenden Ventileinrichtung, sowie mit einer die Ventileinrichtung steuernden Steuerung, wobei die Ventileinrichtung mindestens ein gegen einen Ventilsitz betätigbares Ventilglied umfasst, dessen Lage den Ventilquerschnitt bestimmt, und wobei die Lage des Ventilglieds mit Hilfe eines Steuerdrucks steuerbar ist, wobei ein verstellbarer Ventilkörper vorgesehen ist, dessen Stellposition mit Hilfe elektrischer Mittel durch Zuführen elektrischer Energie einstellbar ist und dessen Steilposition den Steuerdruck bestimmt, wobei bei Beenden der Zufuhr der elektrischen Energie die Stellposition des Ventilkörpers erhalten bleibt.

Die DE10223405A1 beschreibt ein Luftfedersystem eines Kraftfahrzeugs mit
- einem Kompressor, der über eine Ansaugleitung Luft aus der Atmosphäre ansaugt und verdichtet,
- einem dem Kompressor nachgelagerten Trockner, der die Druckluft entfeuchtet,
- einem Speicher, der die Druckluft des Kompressors zu speichern vermag,
- Niveauregelventilen, über die einzelne, den Fahrzeugrädern zugeordnete Luftfedern ansteuerbar sind,
- einer Druckleitung, die den Kompressor mit dem Druckspeicher und den Luftfedern verbindet,
- einer Entlüftungsleitung, über die die Druckleitung mittels eines Schaltventils absperrbar mit der Atmosphäre verbindbar ist und
- einem Abschnitt der Druckleitung zwischen Trockner und Niveauregelventilen, in dem eine Drossel angeordnet ist, wobei
die Druckleitung in dem Abschnitt einen variierbaren Strömungsquerschnitt aufweist.

Die EP1216860A2 beschreibt eine Niveauregelanlage für ein Kraftfahrzeug mit Luftfedern, die zur Niveauregulierung eines Fahrzeugaufbaus mit Druckluft befüllt oder entleert werden können, und mit einem Steuergerät, das die Funktionen Befüllen und Entleeren in Abhängigkeit von dem Niveau des Fahrzeugaufbaus steuert oder regelt, wobei das Steuergerät der Niveauregelanlage über einen Nachrichtenkanal mit einem weiteren Steuergerät des Kraftfahrzeuges in Verbindung steht, und wobei das weitere Steuergerät mit mindestens einem Schalter zur Auslösung einer zusätzlichen Funktion in der Niveauregelanlage verbunden ist, und wobei das weitere Steuergerät über den Nachrichtenkanal eine Signalsequenz an das Steuergerät der Niveauregelanlage sendet, wenn der Schalter von einem ersten Zustand in einen zweiten Zustand überführt wird, und wobei das Steuergerät der Niveauregelanlage die zusätzliche Funktion durchführt, wenn es die Signalsequenz empfängt. Eine Druckluftversorgungsanlage versorgt in einem pneumatischen System die eingangs genannte Luftfederanlage üblicherweise mit Druckluft aus einer Druckluftzuführung, beispielsweise im Bereich eines Druckniveaus von 5 bis 20 bar. Die Druckluft wird mit einem Luftverdichter einer Druckquelle zur Verfügung gestellt. Die Druckquelle ist zur Versorgung der Luftfederanlage mit einem Anschluss einer Pneumatikleitung der Luftfederanlage verbunden, der andererseits auch mit einer Entlüftung pneumatisch verbunden sein kann. Über eine Entlüftungsventilanordnung kann durch Ablassen von Luft die Druckluftversorgungsanlage und die Luftfederanlage entlüftet werden. Eine pneumatische Versorgungsleitung der Druckluftversorgungsanlage weist üblicherweise einen Lufttrockner auf, um einen langfristigen Betrieb der Druckluftversorgungsanlage sicherzustellen bzw. die Ansammlung von Feuchtigkeit im pneumatischen System zu vermeiden.
Jedem Luftbalg der Luftfederanlage ist üblicherweise ein - auch als Schaltventil bezeichnetes - steuerbares Wegeventil in Form eines Magnetventils vorgeschaltet. Ein steuerbares Wegeventil ist an die Pneumatikleitung der Luftfederanlage derart angeschlossen, dass der Luftbalg - abhängig von einem Schaltzustand des steuerbaren Wegeventils - befüllbar oder entlüftbar ist. Mit anderen Worten lassen sich Luftmassen in einem Luftbalg einstellen, um hierdurch das Federungsverhalten bzw. das Niveau beim Fahrzeug zu regeln.
Wünschenswert ist, eine Luftfederanlage der eingangs genannten Art nicht nur hinsichtlich der zunehmenden Anforderung an Schnelligkeit, Flexibilität und Verlässlichkeit, sondern darüber hinaus - ohne Einschränkungen funktionaler Art machen zu müssen - möglichst einfach auszulegen.
An dieser Stelle setzt die Erfindung an, deren Aufgabe es ist, eine Luftfederanlage und ein pneumatisches System sowie ein Fahrzeug und ein Verfahren anzugeben, bei welcher die Pneumatik der Luftfederanlage vereinfacht ist. Insbesondere soll die Vereinfachung derart erfolgen, dass sich auch eine vergleichsweise vereinfachte Steuerung der Luftfederanlage ergibt. Dies soll insbesondere ohne funktionale Einschränkung der Luftfederanlage bzw. des pneumatischen Systems erreichbar sein. Insbesondere soll die Funktionalität einer Luftfederanlage hinsichtlich Schnelligkeit, Flexibilität und Verlässlichkeit erhöht sein.
Betreffend die Luftfederanlage wird die Aufgabe durch die Erfindung mittels einer Luftfederanlage der eingangs genannten Art gelöst, bei der erfindungsgemäß die Merkmale des kennzeichnenden Teils des Anspruchs 1 vorgesehen sind.

Die Luftfederanlage für ein Fahrzeug mit einer zum Betrieb mit einer Druckluftversorgungsanlage eingerichteten Pneumatikanlage weist auf:
- eine Pneumatikleitung mit einem Anschluss zur Druckluftversorgungsanlage,
- eine Anzahl von Luftbälgen, wobei ein Luftbalg über ein steuerbares Wegeventil in Form eines Magnetventils an die Pneumatikleitung angeschlossen ist, und wobei
- der Luftbalg abhängig von einem Schaltzustand des steuerbaren Wegeventils befüllbar oder entlüftbar ist. Erfindungsgemäß ist vorgesehen, dass
- ein erstes Wegeventil und ein zweites Wegeventil eine steuerbare Magnetventilanordnung bilden, wobei das erste Wegeventil ein Primärventil und das zweite Wegeventil ein Sekundärventil der Magnetventilanordnung bildet; insbesondere weist die Magnetventilanordnung einen von einem Magnetteil aktuierbaren Pneumatikteil auf;
- ein erster Luftbalg und ein zweiter Luftbalg der Magnetventilanordnung zugeordnet und abhängig von einem Schaltzustand des Primärventils und des Sekundärventils befüllbar oder entlüftbar ist, und wobei
- das Primärventil und das Sekundärventil mit einem beiden gemeinsamen auf beide wirkenden Steuermittel, insbesondere des Magnetteils der Magnetventilanordnung, steuerbar ist.

Die Erfindung geht von der Überlegung aus, dass einem als Druckkammer für eine Luftfeder dienender Luftbalg der Luftfederanlage ein Schaltventil, nämlich über ein steuerbares Wegeventil in Form eines Magnetventils zur Steuerung einer Luftmasse, im Luftbalg vorgeschaltet ist. Aus Gründen der funktionalen Sicherheit ist insbesondere jedem Luftbalg jeweils ein Wegeventil zugeordnet. Jedes der Wegeventile könnte grundsätzlich über eine separate Steuerleitung mit einer Steuerung verbunden sein und getrennt steuerbar bzw. überwachbar sein. Die Erfindung hat dagegen erkannt, dass es möglich ist, ohne Einschränkungen der funktionalen Sicherheit jedem Luftbalg ein Wegeventil zuzuordnen und dennoch Vereinfachungen hinsichtlich der Steuerung vorzunehmen. Dazu sieht die Erfindung überraschend vor, ein erstes und ein zweites Wegeventil als eine steuerbare Magnetventilanordnung auszubilden, wobei das erste Wegeventil ein Primärventil und das zweite Wegeventil ein Sekundärventil der Magnetventilanordnung bildet. Die Magnetventilanordnung weist vorteilhaft einen von einem Magnetteil aktuierbaren Pneumatikteil auf. Abhängig vom Schaltzustand des Primärventils und des Sekundärventils ist ein erster und ein zweiter der Magnetventilanordnung zugeordneter Luftbalg befüllbar oder entlüftbar. Diese Zusammenfassung eines ersten und zweiten Wegeventils in einer Magnetventilanordnung bildet gemäß der Erkenntnis der Erfindung die Basis zur Vereinfachung einer Pneumatik und Steuerung des ersten und zweiten Wegeventils. Erfindungsgemäß ist dazu vorgesehen, dass das Primärventil und das Sekundärventil mit einem beiden gemeinsamen auf beide wirkenden Steuermittel, insbesondere des Magnetteils, der Magnetventilanordnung steuerbar ist. Es hat sich überraschend gezeigt, dass mit bei einem erfindungsgemäß vorgesehenen auf beide - Primärventil und Sekundärventil - wirkenden Steuermittel dieselben gleichzeitig oder sequentiell elektronisch geregelt werden können. Insbesondere aber lassen sich die Anzahl von den Luftbälgen zugeordneten Wegeventile [beispielsweise vier für ein vierrädriges Fahrzeug] zu Gruppen von [beispielsweise zwei] Magnetventilanordnungen mit jeweils einem Primärventil und einem Sekundärventil zusammenfassen.

Mit dem Konzept der Erfindung lassen sich Kosten und Ausfallrisiken einer Luftfederanlage reduzieren. Dieser Vorteil beruht maßgeblich darauf, dass aufgrund des vorgesehenen gemeinsam wirkenden Steuermittels des Magnetteils der Magnetventilanordnung Schnittstellen, Leitungen und Steuerendstufen wegfallen, die im Stand der Technik für jedes Wegeventil separat vorzusehen sind. Darüber hinaus können Anschlüsse in der Verkabelung und der Elektronik entfallen. Insbesondere kann darüber hinaus die Anzahl von Steuermitteln reduziert werden, da wenigstens das Primärventil und das Sekundärventil mit einem beiden gemeinsamen auf beide wirkenden Steuermittel des Magnetteils der Magnetventilanordnung angesteuert werden können. Dadurch verringert sich eine Leistungsaufnahme erheblich, was ebenfalls die Ausfallsicherheit erhöht. Insgesamt führt das Konzept der Erfindung auch zu einem geringeren Bauvolumen und verringerten Gewicht einer Luftfederanlage.

Zu einem Pneumatikteil einer Magnetventilanordnung gehören insbesondere die pneumatisch wirkenden Teile, wie das Ventil als solches mit Ventilkörper, Ventilsitz, Ventilgehäuse oder dergleichen. Zu einem Magnetteil einer Magnetventilanordnung gehören insbesondere die elektrisch und/oder magnetisch wirkenden Teile, wie Aktuier- und/oder Steuermittel für das Ventil sowie Spule, mit Wicklung, Anker, Joch und Kern sowie Steuerleitung oder dergleichen und Anschlüsse der Steuerleitung an Steuerung und Spule.

Das erfindungsgemäße gemeinsam wirkende Steuermittel ist insbesondere ein auf Primär- und Sekundärventil wirkender gemeinsamer Magnetteil, insbesondere ein Spulenkörper, beispielsweise unter Bildung eines Doppelanker-Magnetventils oder eine gemeinsame Steuerleitung.

In besonders bevorzugten Weiterbildungen des Konzepts der Erfindung ist vorgesehen, das Primärventil und Sekundärventil der Magnetventilanordnung entweder parallel oder in Reihe zu schalten. Das Primärventil und Sekundärventil sollte stromlos geschlossen sein. Prinzipiell ist eine stromlos offene Abwandlung jedoch nicht ausgeschlossen. Alle vier Abwandlungen können beliebig miteinander kombiniert werden. Eine Reihenanordnung des Primär- und Sekundärventils eignet sich für eine besonders flexibel gestaltbare, zeitlich sequentielle Schaltungsabfolge von Primär- und Sekundärventil. Eine Parallelanordnung des Primär- und Sekundärventils eignet sich insbesondere zur gleichzeitigen Schaltung von Primär- und Sekundärventil. Das Primär-und/oder Sekundärventil ist bevorzugt jeweils in Form eines 2/2-Wegeventils gebildet. Eine Reihenanordnung des Primär- und Sekundärventils eignet sich insbesondere zur sequentiellen Schaltung von Primär- und Sekundärventil. Das Primärventil ist bevorzugt in Form eines 2/2-Wegeventils bzw. das Sekundärventil ist bevorzugt in Form eines 3/2-Wegeventils gebildet.

Das Konzept der Erfindung führt auch auf ein Fahrzeug nach Anspruch 13 mit einer Luftfederanlage gemäß dem Konzept der Erfindung sowie mit einer Druckluftversorgungsanlage. Die Druckluftversorgungsanlage weist vorzugsweise eine Druckquelle, eine Entlüftung und eine an den Anschluss der Pneumatikleitung angeschlossene pneumatische Versorgungsleitung auf, in welcher ein Lufttrockner angeschlossen ist. Das Konzept der Erfindung führt auch auf ein erfindungsgemäßes Verfahren nach Anspruch 14.

Weitere vorteilhafte Weiterbildungen der Erfindungen sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Im Rahmen einer besonders bevorzugten Weiterbildung der Erfindung ist - wie oben erwähnt - vorgesehen, dass der gemeinsame auf das Primär- und das Sekundärventil wirkende Magnetteil einen auf das Primär- und Sekundärventil wirkenden gemeinsamen Spulenkörper als gemeinsames Steuermittel aufweist. Dies hat den Vorteil, dass ein separater Spulenkörper für jedes der Wegeventile entfallen kann. Die Weiterbildung sieht vor, dass lediglich für jede Magnetventilanordnung ein einziger Spulenkörper als gemeinsames auf Primär- und Sekundärventil gemeinsam wirkendes Steuermittel vorzusehen ist. Vorteilhaft entfällt damit praktisch die Hälfte aller sonst erforderlicher Spulenkörper, was eine erhebliche Verringerung an Gewicht und Steueraufwand bedeutet. Insbesondere ist im Rahmen dieser Weiterbildung vorgesehen, dass die Magnetventilanordnung als ein Doppelankermagnetventil gebildet ist. Ein Doppelankermagnetventil weist bevorzugt einen ein erstes Dichtelement des Primärventils tragenden Primäranker und einen ein zweites Dichtelement des Sekundärventils tragenden Sekundäranker auf, die in einem gemeinsamen Spulenkörper als gemeinsames Steuermittel angeordnet sind. Der Primäranker ist dabei einem Primärventilsitz und der Sekundäranker einem Sekundärventilsitz zugeordnet. Die grundsätzliche Funktionsweise eines an sich bekannten Doppelankermagnetventils kann beispielsweise DE 35 01 708 A1 der Anmelderin entnommen werden. Im Rahmen einer besonders bevorzugten Weiterbildung ist vorgesehen, dass die Pneumatikanlage eine Galerieleitung aufweist, die an die Pneumatikleitung angeschlossen ist. Unter einer Galerieleitung ist insbesondere eine pneumatische Verteilerleitung zu verstehen, von der wenigstens zwei Zweigleitungen abgehen. Insbesondere ist ein Luftbalg an eine an die Galerieleitung angeschlossene Zweigleitung angeschlossen. Der Aufbau der Pneumatikanlage mit einer Pneumatikleitung zum Anschluss an die Druckluftversorgungsanlage sowie einer Galerieleitung und daran angeschlossenen Zweigleitungen mit jeweils wenigstens einem Luftbalg und wenigstens einem Wegeventil - d. h. Primär- und/oder Sekundärventil - hat sich als besonders effektiv hinsichtlich der Dynamik und Wirkungsweise erwiesen.
Vorteilhaft weist die Pneumatikanlage wenigstens eine weitere Druckkammer, beispielsweise in Form eines Druckluftspeichers, eines Drucksensors oder dergleichen, auf. Insbesondere kann eine solche Druckkammer über ein weiteres steuerbares Wegeventil in Form eines Magnetventils an die Pneumatikleitung derart angeschlossen sein, dass die Druckkammer - abhängig von einem Schaltzustand des steuerbaren Wegeventils - befüllbar oder entlüftbar ist. Als besonders bevorzugt hat sich erwiesen, dass auch das weitere Wegeventilteil Teil einer Magnetventilanordnung gemäß dem Konzept der Erfindung ist, also in Form eines Primärventils oder Sekundärventils Teil einer Magnetventilanordnung ist.

Im Rahmen des weiterbildenden Konzepts einer Pneumatikanlage mit Pneumatikleitung, Galerieleitung und Zweigleitungen hat es sich als besonders vorteilhaft erwiesen, dass das Primär- und/oder Sekundärventil in wenigstens einer Zweigleitung an die Pneumatikleitung, vorteilhaft über die Galerieleitung, angeschlossen ist. Insbesondere ist mit Vorteil vorgesehen, dass ein pneumatischer balgseitiger Anschluss des Primärventils an eine erste Zweigleitung und ein pneumatischer balgseitiger Anschluss des Sekundärventils an eine zweite Zweigleitung angeschlossen ist. Die erste und zweite Zweigleitung sind vorteilhaft separate Zweigleitungen, die jeweils einen Luftbalg aufweisen. Dadurch wird sichergestellt, dass jedem Luftbalg wenigstens ein Wegeventil, nämlich das Primärventil und/oder das Sekundärventil, vorgeordnet ist. An die Galerieleitung kann auch ein Drucksensor direkt oder über eine Zweigleitung angeschlossen sein.

Ein Druckbegrenzer hält vorteilhaft eine pneumatische Verbindung bis zu einem vergleichsweise hohen Grenzdruck dicht und öffnet erst bei einem vergleichsweise hohen Grenzdruck.

Die Erfindung führt auch auf ein Fahrzeug mit wenigstens zwei Achsen, wobei der erste und zweite Luftbalg an einer der zwei Achsen zur Bildung je einer Luftfeder angeordnet ist. Ein solches Fahrzeug kann beispielsweise ein Personenfahrzeug, insbesondere ein SUV (Sport Utility Vehicle) wie eingangs erwähnt, sein. Das Konzept der Erfindung hat sich auch besonders bewährt bei einem Nutzfahrzeug.

Im Rahmen besonders bevorzugter Weiterbildungen kann ein Fahrzeug eine einachsige Luftfederung aufweisen, die dem Konzept der Erfindung folgt. Mit anderen Worten ist bei einer einzigen Achse des Fahrzeugs eine Magnetventilanordnung gemäß dem Konzept der Erfindung mit einem Primär- und einem Sekundärventil vorgesehen. Diese sind über ein das über ein beiden gemeinsames auf beide wirkendes Steuermittel des Magnetteils der Magnetventilanordnung steuerbar.

Im Rahmen einer Weiterbildung ist es auch möglich, eine weitere Achse des Fahrzeugs mit einer erfindungsgemäßen Magnetventilanordnung zu versehen. Dazu ist es insbesondere vorgesehen, dass zusätzlich zur ersten Achse wenigstens auch eine zweite Achse des Fahrzeugs eine weitere Magnetventilanordnung gleichermaßen gemäß dem Konzept der Erfindung aufweist, d. h. mit einem dritten und einem vierten Luftbalg, dem ein Primärventil und ein Sekundärventil gemäß der weiteren Magnetventilanordnung zugeordnet ist.

Eine sogenannte Mittelwertregelung führt dazu, dass sich ein Druck bei dem einer Achse eines Fahrzeugs zugeordneten ersten und zweiten Luftbalg gemäß einem Mittelwert des Drucks im ersten und zweiten Luftbalg einstellt. Bei einer sogenannten Links-Rechts-Regelung führt eine separate Druckeinstellung dazu, dass sich ein Druck im ersten und zweiten Luftbalg separat einstellen lässt.

Das Konzept der Erfindung umfasst auch Weiterbildungen, bei welchen eine Mittelwertregelung bei nur einer oder beiden oder mehreren, ggfs. allen Achsen vorgesehen ist. Das Konzept der Erfindung umfasst auch eine Weiterbildung, bei welcher eine Links-Rechts-Regelung bei einer oder beiden oder mehreren, ggfs. allen Achsen vorgesehen ist. Das Konzept der Erfindung umfasst auch eine Weiterbildung, bei welcher bei einer der Achsen eine Mittelwertregelung und bei einer anderen Achse eine Links-Rechts-Regelung vorgesehen ist. Je nach Bedarf lassen sich Kombinationen dieser Weiterbildungen für bestimmte Betriebszustände eines Fahrzeugs als auch für Inbetriebnahmeprozesse oder Sonderanwendungen mit erhöhtem regelungstechnischem Aufwand realisieren.

Im Rahmen der oben erwähnten bevorzugten ersten Variante hat es sich als vorteilhaft erwiesen, dass das Primärventil und Sekundärventil in einer Parallelschaltung angeordnet sind. Vorteilhaft ist dazu ein pneumatischer galerieseitiger Anschluss des Primärventils an eine erste Zweigleitung und ein pneumatischer galerieseitiger Anschluss des Sekundärventils an eine zweite - separate - Zweigleitung angeschlossen ist. Die Ausbildung der Magnetventilanordnung als Parallelschaltung von Wegeventilen hat sich insbesondere im Rahmen einer Mittelwertregelung als vorteilhaft erwiesen, bei welcher auf einen Mittelwert des Drucks des ersten und zweiten Luftbalgs geregelt wird. Es hat sich als vergleichsweise einfach erwiesen, das Primär- und Sekundärventil mit gleichen Schaltzuständen anzusteuern. Besonders vorteilhaft ist eine entsprechende Steuerung ausgebildet, mittels welcher dem ersten und zweiten Luftbalg ein Druck nur gemäß einem Mittelwert des Drucks des ersten und zweiten Luftbalgs regelbar ist, indem dem Primärventil und Sekundärventil simultan immer gleiche Schaltzustände vorgegeben werden. Eine solche Steuerung hat sich als vergleichsweise einfach erwiesen, da sie ohne Stromregelung auskommt. Für den Fall, dass das Primär- und Sekundärventil den zwei Rädern einer einzigen Achse zugeordnet sind, kann im Rahmen dieser sog. Mittelwertregelung die Achse jeweils in Bezug auf den Mittelwert eines Drucks an den Luftbälgen der beiden Räder geregelt werden. Im Ergebnis wird die Achse also links und rechts gleich angesteuert.

Besonders einfach lässt sich eine Steuerung realisieren, bei welcher lediglich eine Achse eines Fahrzeugs mit Luftfedern versehen ist, die gemäß einer Mittelwertregelung der vorgenannten Art gesteuert werden. Bevorzugt ist dies die Vorderachse eines Fahrzeugs. Die Hinterachse eines Fahrzeugs kann beispielsweise mit üblichen Wegeventilen versehen sein.

Im Rahmen einer anspruchsvolleren Weiterbildung - auch im, aber nicht beschränkt auf den Rahmen der ersten Variante - hat es sich als vorteilhaft erwiesen, die Steuerung derart auszubilden, dass in dem ersten und zweiten Luftbalg ein unterschiedlicher Druck geregelt wird. Dazu weist eine die erste Variante weiterbildende Steuerung insbesondere ein Stromregelmodul auf, mittels dem dem Primär- und Sekundärventil unterschiedliche Schaltzustände vorgebbar sind. Auch diese Abwandlung einer Steuerung lässt sich bevorzugt mit einer als Parallelschaltung ausgebildeten Magnetventilanordnung, d.h. im Rahmen der ersten Variante, erreichen.

Durch die Vorgabe von unterschiedlichen Schaltzuständen des Primär- und Sekundärventils lässt sich eine sog. Rechts-Links-Regelung erreichen, bei welcher ein dem linken Rad zugeordnetes Wegeventil-beispielsweise das Primärventil - und ein dem rechten Rad zugeordnetes Wegeventil - beispielsweise das Sekundärventil - mit unterschiedlichen Schaltzuständen geschaltet werden, so dass den zugeordneten Luftbälgen unterschiedliche Drücke beaufschlagbar sind.

Besonders einfach lässt sich eine solche Links-Rechts-Regelung basierend auf einer zweiten Variante einer Magnetventilanordnung in einer Reihenschaltung realisieren. Bevorzugt ist im Rahmen einer Weiterbildung vorgesehen, dass das Primärventil und Sekundärventil in einer Reihenschaltung angeordnet sind, wobei ein pneumatischer galerieseitiger Anschluss des Primär- und Sekundärventils der Magnetventilanordnung an dieselbe Zweigleitung angeschlossen ist.

Insbesondere weist wenigstens eine pneumatische Leitung der Pneumatikanlage ein Restdruckhalteventil auf. Vorteilhaft kann wenigstens eine pneumatische Leitung der Pneumatikanlage -insbesondere die Pneumatikleitung, die Galerieleitung oder eine Zweigleitung- ein Restdruckhalteventil und/oder einen Druckbegrenzer aufweisen. Für bestimmte Anforderungen ist es vorteilhaft, einen Restdruck im System zu halten. Dies kann ein Zusammenfalten von Luftbälgen in einer Luftfederanlage vermeiden. Ein Druckbegrenzer hat den Vorteil, dass die Pneumatikanlage vor einer zu hohen Druckbelastung geschützt wird.

Das Konzept der Erfindung führt auch auf ein Verfahren gemäß dem Anspruch 14. Insbesondere ist bei dem Verfahren im Rahmen einer Weiterbildung vorgesehen, dass das Primärventil und das Sekundärventil der Magnetventilanordnung ausgebildet sind, in einem ersten Betriebsmodus zeitlich sequentiell mit einem über eine Stromamplitude ansteigenden Steuerstrom aktiviert zu werden. Dazu kann vorgesehen sein, dass der Steuerstrom zunächst nur eine Stromamplitude zur Aktivierung des Primärventils übersteigt und danach in einem Bereich verbleibt, der lediglich das Primärventil aktiviert hält, während das Sekundärventil nicht aktiviert ist. Zu einem späteren Zeitpunkt kann der Steuerstrom eine zweite Stromamplitude übersteigen, die ausreichend ist, auch das Sekundärventil zu aktivieren. Danach kann der Steuerstrom eine Stromamplitude aufweisen, die ausreichend ist, sowohl das Primär- als auch das Sekundärventil im aktivierten Zustand zu halten. Zum Deaktivieren des Sekundär- und Primärventils kann ein Steuerstrom, gegebenenfalls mit bekannter Hysterese, unter die genannten Stromamplituden gesenkt werden. In einem zweiten Betriebsmodus kann der Steuerstrom vergleichsweise schnell auf eine Stromamplitude ansteigen, die über einer Stromamplitude liegt, die ausreichend ist, das Primär- und das Sekundärventil gleichzeitig zu aktivieren. Dazu sollte die Stromamplitude oberhalb der größten Stromamplitude zur Aktivierung des Primär- und Sekundärventils liegen.
Ein Aktivieren des Primär- und/oder Sekundärventils kann zum Ablassen von Luft oder zum Zuführen von Luft zu einem Luftbalg erfolgen. Die Luft kann in einer Luftströmung über die Pneumatikleitung geführt werden. Eine Aktivierung eines Primär- oder Sekundärventils kann beispielsweise nach Maßgabe einer Höhenstandssteuerung des Fahrzeugs erfolgen. Dazu kann beispielsweise eine mit einer Höhenstandsvorgabe verbundene Luftmassenregelung vorgesehen sein, die einen Volumenstrom über die Pneumatikleitung steuert. Es kann auch eine Aktivierung des Primär- und/oder Sekundärventils zeitgesteuert erfolgen. Eine Zeitsteuerung empfiehlt sich beispielsweise, wenn eine Höhenstandsanzeige zu verrauscht ist. Eine zeitgesteuerte Aktivierung von Primär- und Sekundärventil kann beispielsweise auch im Rahmen eines Regenerationszyklus für die Druckluftversorgungsanlage erfolgen.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der beanspruchten Erfindung abzuweichen.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
Fig. 1 eine schematische Darstellung einer Ausführungsform eines pneumatischen Systems mit einer Luftfederanlage und einer Druckluftversorgung in Form eines Speichers;
Fig. 2 in Ansichten (a) bis (d) unterschiedliche Schaltzustände einer Magnetventilanordnung aus Primärventil und Sekundärventil in einer pneumatischen Parallelschaltung - dies in Bezug auf zwei Bälge, die zur Bildung von zwei Luftfedern einer Achse bei einem Fahrzeug dienen;
Fig. 3 in Ansichten (a) bis (c) unterschiedliche Schaltzustände einer Magnetventilanordnung aus Primärventil und Sekundärventil in einer pneumatischen Reihenschaltung - dies in Bezug auf zwei Luftbälge, die zur Bildung von zwei Luftfedern einer Achse bei einem Fahrzeug dienen;
Fig. 4 eine Grafik einer beispielhaften Stromamplitude eines Steuersignals im zeitlichen Verlauf zur Verdeutlichung von Schaltströmen für eine Magnetventilanordnung in Form eines Doppelankermagnetventils, bei dem das Primärventil und Sekundärventil über eine gemeinsame Steuerleitung angesteuert werden.

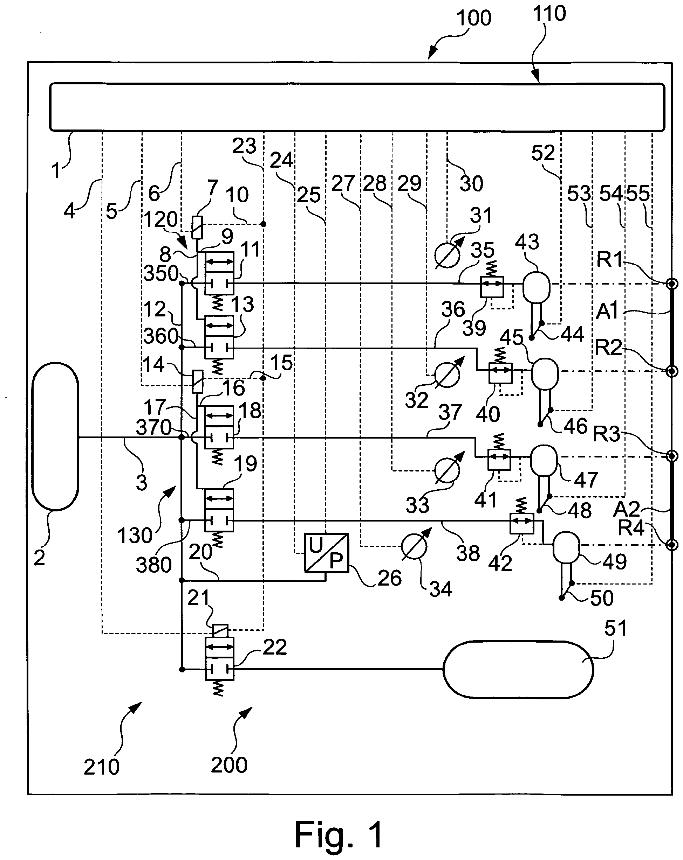

In Fig. 1 ist für ein schematisch dargestelltes Fahrzeug 100 ein Ausführungsbeispiel einer Luftfederanlage 110 gezeigt, die eine über eine Steuereinheit 1 als Teil einer oder mehrerer Steuerungen elektronisch geregelte Pneumatikanlage 200 aufweist. Die Pneumatikanlage 200 bildet zusammen mit einer vorliegend symbolisch als Speicher dargestellten Druckluftversorgungsanlage 2 ein pneumatisches System 210. Eine Druckluftversorgungsanlage 2 weist üblicherweise eine hier nicht näher dargestellte Druckluftquelle, eine Entlüftung und eine an den Anschluss der Pneumatikleitung 3 angeschlossene pneumatische Versorgungsleitung mit einem Lufttrockner auf.

Das Fahrzeug 100 kann beispielsweise ein Personenfahrzeug wie ein SUV od.dgl. oder ein Nutzfahrzeug sein. Vorliegend sind eine erste Achse A1 mit zwei Rädern R1 und R2 und eine zweite Achse A2 mit zwei Rädern R3 und R4 des Fahrzeugs 100 symbolisch dargestellt. Die Luftfederanlage 110 der Fig. 1 ist insofern als Zwei-Achs-Luftfederanlage für ein zweiachsiges Fahrzeug 100 ausgelegt. In einer Abwandlung können eine oder mehrere ähnliche Luftfederanlagen gemäß einem oben erläuterten weiterbildenden Konzept auch für nur eine Achse oder mehr als zwei Achsen eines Fahrzeugs nach Bedarf konzipiert sein - die Anzahl von Wegeventilen und Magnetventilanordnungen gemäß dem Konzept der Erfindung kann entsprechend angepasst werden. Generell kann nicht nur Druckluft, sondern auch ein anderes gasförmiges oder hydraulisches Druckfluid zum Einsatz kommen. Die Erfindung erlaubt eine einfache Realisierung einer Luftfederung oder allgemein Fluidfederung, bei der mehrere Luftfedern oder Bälge mit verringerter Anzahl von Magnetventilen gesteuert werden können.

Vorliegend weist die Luftfederanlage 110 eine erste und zweite Magnetventilanordnung 120, 130 in einer Ausgestaltung gemäß dem Konzept der Erfindung auf. Die Luftfederanlage 110 für ein zweiachsiges Fahrzeug 100, d.h. mit erster Achse A1 und zweiter Achse A2, ist mit vier Wegeventilen 11, 13, 18, 19 versehen, von denen jedes jeweils einem Luftbalg 43, 45, 46, 47 unter Bildung einer Luftfeder vorgeschaltet ist. Jedes der Wegeventile 11, 13, 18, 19 ist vorliegend als ein steuerbares 2/2-Wegeventil, nämlich als Magnetventil, gebildet. Mittels der Wegeventile 11, 13, 18, 19 lassen sich Luftmassen in den vier Luftbälgen 43, 45, 46, 47 regeln. Wie in Fig. 1 symbolisch durch strichpunktierte Linien erkennbar ist den vier an den Fahrzeugachsen A1, A2 angebrachten Rädern R1, R2, R3, R4 jeweils eine Luftfeder zugeordnet. Bei dem in Fig. 1 gezeigten Ausführungsbeispiel sind die beiden Luftbälge 43, 45 der als Vorderachse gebildeten ersten Achse A1 des Fahrzeugs 100 zugeordnet, während die Luftbälge 47, 49 der als Hinterachse gebildeten zweiten Achse A2 des Fahrzeugs 100 zugeordnet sind.

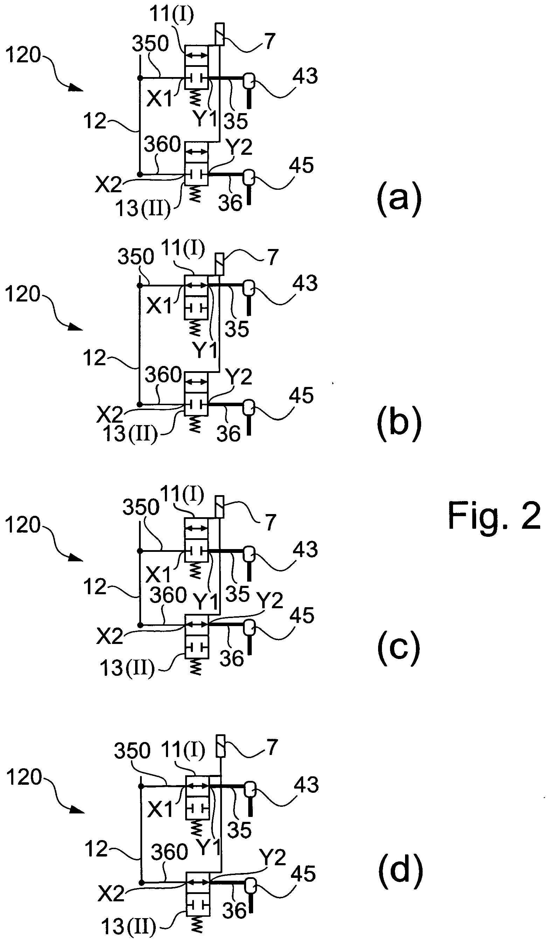

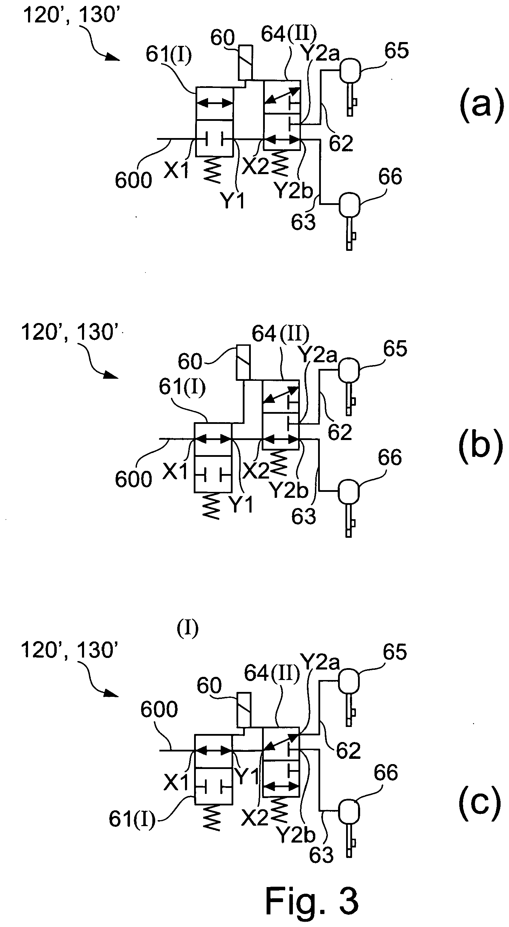

Vorliegend bildet das erste Wegeventil 11 ein Primärventil und das zweite Wegeventil 13 ein Sekundärventil der Magnetventilanordnung 120. Das weitere erste Wegeventil 18 bildet ein Primärventil und das weitere zweite Wegeventil 19 bildet ein Sekundärventil der weiteren Magnetventilanordnung 130. Ein Primärventil einer Magnetventilanordnung wird im folgenden durchgehend mit "I" bezeichnet. Ein Sekundärventil einer Magnetventilanordnung wird im folgenden durchgehend mit "II" bezeichnet. In den Darstellungen der Schaltzustände der Fig.2 und Fig. 3 sind die Wegeventile entsprechend als Primärventil I bzw. Sekundärventil II gekennzeichnet. Die Wegeventile 11, 13, 18, 19 können optional in einem hier nicht dargestellten Ventilblock zusammengefasst sein.

Die Steuereinheit 1, beispielsweise eine elektronische Steuereinheit ECU, ist über Steuerleitungen 5, 6 mit jeweils einem den Magnetteil einer Magnetventilanordnung 120, 130 bildenden Spulenkörper 14, 7 verbunden. D.h. die Steuereinheit 1 ist ausgebildet, eine Betätigung der ersten Wegeventile 11, 18 und zweiten Wegeventile 13, 19 jeweils derart vorzunehmen, dass ein -in Fig.2 näher bezeichnetes- Primärventil I und Sekundärventil II einer der Magnetventilanordnungen 120, 130 über die Steuerleitungen 5, 6 und Spulenkörper 14, 7 zu steuern ist. Dabei bilden die Steuerleitungen 5, 6 und Spulenkörper 14, 7 jeweils dem Primärventil I und Sekundärventil II gemeinsame und auf beide wirkende Steuermittel. Der Spulenkörper 7 ist -wie über die Verbindungen 8, 9 angezeigt- wesentlicher Bestandteil des Magnetteils der Wegeventile 11, 13 und mit diesen gekoppelt. Der Spulenkörper 14 ist -wie über die miteinander verbundenen Verbindungen 16, 17 angezeigt- wesentlicher Bestandteil des Magnetteils der Wegeventile 18, 19 und mit diesen gekoppelt. Vorliegend ist dazu die Magnetventilanordnung 120, 130 jeweils als ein an sich bekanntes nicht näher dargestelltes Doppelanker-Magnetventil gebildet. Ein Doppelanker-Magnetventil weist dazu im einzelnen einen ein erstes Dichtelement des Primärventils I (eines der ersten Wegeventile 11, 18) tragenden Primäranker und einen ein zweites Dichtelement des Sekundärventils II (eines der zweiten Wegeventile 13, 19) tragenden Sekundäranker auf, die in einem oben genannten gemeinsamen Spulenkörper 14, 7 angeordnet sind. Dabei ist der Primäranker einem Primärventilsitz und der Sekundäranker einem Sekundärventilsitz zugeordnet.

Darüber hinaus ist ein weiterer Spulenkörper 21 eines weiteren als Magnetventil gebildeten Wegeventils 22 über eine Steuerleitung 4 von der Steuereinheit 1 steuerbar, um einen Druckluftspeicher 51 über die Galerieleitung 12 selektiv mit der Druckluftversorgungsanlage 2 zu verbinden oder von dieser abzukoppeln.

Die anderen Anschlüsse der Spulenkörper 7, 14, 21 sind jeweils über einzelne Steuerleitungen, z. B. 10, 15, mit einer gemeinsamen Steuerleitung 23 und über diese mit der Steuereinheit 1 verbunden, wobei die gemeinsame Steuerleitung 23 durch die Steuereinheit 1 auf ein gemeinsames Potential, beispielsweise Referenzpotential, Nullpotential oder Speisespannungspotential, einstellbar ist.

Eine Druckluftversorgungsanlage 2 kann beispielswiese ein einfacher Druckluftbehälter oder vorliegend eine nicht im einzelnen dargestellte Druckluftversorgungsanlage 2 sein, die eine Druckquelle, eine Entlüftung und eine an den Anschluss der Pneumatikleitung 3 angeschlossene pneumatische Versorgungsleitung mit einem Lufttrockner aufweist. An die Pneumatikleitung 3 ist vorliegend zunächst eine Galerieleitung 12 als Druckluftverteilerleitung angeschlossen. An die Galerieleitung 12 ist über Zweigleitungen 350, 360, 370, 380 ein jeweiliger galerieseitiger Druckluft-Anschluss der Wegeventile 11, 13, 18, 19 angeschlossen.

In der Ausführungsform der Fig.1 ist -wie noch anhand der Fig.2 und Fig.3 näher erläutert- an einen balgseitigen Druckluft-Anschluss jedes der Wegeventile 11, 13, 18, 19 eine weitere, eine Zweigleitung 350, 360, 370, 380 fortsetzende jeweils separate Zweigleitung 35, 36, 37, 38 angeschlossen. An die Zweigleitungen 35, 36, 37, 38 ist jeweils ein Luftbalg 43, 45, 46, 47 angeschlossen. Die den Fahrzeugrädern R1, R2, R3, R4 jeweils zugeordneten Luftbälge 43, 45, 47, 49 sind weiter über Restdruckhalteventile 39, 40, 41, 42 in den Zweigleitungen 35, 36, 37, 38 mit den balgseitigen Druckluft-Anschlüssen der ersten und zweiten Wegeventile 11, 18 und 13, 19 in der in Fig. 1 gezeigten Weise verbunden. Den Luftbälgen 43, 45, 47, 49 ist weiterhin jeweils ein Dämpferventil 44, 46, 48, 50 zugeordnet, die über Steuerleitungen 52, 53, 54, 55 durch die Steuereinheit 1 steuerbar sind.

Zur Messung des Drucks in der Versorgungsleitung 3 und der Galerieleitung 12 ist ein Drucksensor 26 vorgesehen, der über eine Druckluftleitung 20 mit der Galerieleitung 12 zur Druckmessung verbunden ist und über elektrische Steuerleitungen 24, 25 an die Steuereinheit 1 angeschlossen ist. Über die elektrischen Steuerleitungen 24, 25 kann die Spannungsversorgung für den Drucksensor 26 aus der Steuereinheit 1 sowie die Signal-Rückführung zur Steuereinheit 1 erfolgen. Alternativ kann auch eine separate dritte, nicht gezeigte elektrische Steuerleitung für die Signal-Rückführung zur Steuereinheit 1 vorgesehen sein. Der Drucksensor 26 wandelt den gemessenen Luftdruck in ein elektrisches Signal um, das über die Steuerleitungen 24, 25 der Steuereinheit 1 zuführbar ist und von dieser zur Systemsteuerung ausgewertet wird.

Bei dem in Fig. 1 gezeigten Ausführungsbeispiel sind Sensoren 31, 32, 33, 34 vorhanden, die ihre Sensorsignale über Steuerleitungen 27 bis 30, wie gezeigt, an die Steuereinheit 1 anlegen und über diese Steuerleitungen mit der benötigten Energie gespeist werden können. Die Sensoren 31, 32, 33, 34 können als mit Pulsbreitenmodulation, (PWM), arbeitende Sensoren ausgelegt sein, die beispielsweise den Abstand zwischen den nicht dargestellten Rädern des Fahrzeugs und dem Fahrzeugaufbau erfassen können. Die Ansteuerung der Luftbälge kann abhängig von den Sensorsignalen erfolgen, um einen konstanten, lastunabhängigen Abstand zwischen einem Rad R1, R2, R3, R4 und einem Fahrzeugaufbau zu erreichen oder aber um den Abstand zwischen einem Rad R1, R2, R3, R4 und dem Fahrzeugaufbau gezielt zu verändern. Es besteht beispielsweise auch die Möglichkeit der Systementlüftung, z. B. durch gezielte Verbindung der Luftbälge 43, 45, 47, 49 mit der Atmosphäre über nicht gezeigte, durch die Steuereinheit 1 steuerbare Entlüftungsventile. Damit ist z.B. eine Niveaukorrektur durch Steuerung der jeweiligen Luftmassen in den vier Luftbälgen 43, 45, 47, 49 über die Wegeventile 11, 13, 18, 19 und die Entlüftungsventile möglich, so dass z.B. ein Absenken des Fahrzeugaufbaus erreichbar ist.

Bei dem in Fig. 1 gezeigten Ausführungsbeispiel wird eine Luftmasse in den vier Luftfedern bzw. Luftbälgen 43, 45, 47, 49 über die Wegeventile 11, 13, 18, 19 gesteuert. Jeweils ein Primärventil I (Wegeventile 11, 18) wird zusammen mit einem Sekundärventil II (Wegeventile 13, 19) durch einen der beiden Spulenkörper 7, 14 kontrolliert. Konkret sind, wie aus Fig. 1 ersichtlich ist, jeweils das erste und zweite Wegeventil 11, 13 und das weitere erste und zweite Wegeventil 18, 19 mit einem gemeinsamen elektrisch ansteuerbaren Spulenkörper 7 bzw. 14 ausgestattet, der jeweils als Teil einer Magnetspule des Magnetteils der Magnetventilanordnung 120 und der weiteren Magnetventilanordnung 130 gebildet ist. Zur Betätigung der vier Wegeventile 11, 13, 18, 19 sind also nur zwei Spulenkörper 7, 14 erforderlich, was den Aufbau und Steuerungsaufwand vereinfacht.

Gemäß der Ausführungsform der Fig.1 kann eine ausgewogene Radlastverteilung erzielt werden mit einem Primärventil I und einem Sekundärventil II einer Magnetventilanordnung 120, 130. In einer Magnetventilanordnung 120, 130 sind das erste und zweite Wegeventil 11, 13 und das weitere erste und zweite Wegeventil 18, 19 jeweils pneumatisch parallel geschaltet. Dazu ist ein pneumatischer galerieseitiger Anschluss eines Primärventils (erste Wegeventile 11, 18) an eine erste Zweigleitung 350, 370 und ein pneumatischer galerieseitiger Anschluss eines Sekundärventils (zweite Wegeventile 13, 19) an eine zweite Zweigleitung 360, 380 angeschlossen.

Dadurch kann -bevorzugt im Rahmen eines in Fig. 2(d) gezeigten Schaltzustandes einer Magnetventilanordnung 120, 130 mit einer Reihenschaltung eines Primär- und Sekundärventils I, II- eine sogenannte Mittelwertregelung realisiert werden. Bei dem in Fig. 1 gezeigten Ausführungsbeispiel kann beispielsweise eine für eine der Achsen A1, A2 eingerichtete Mittelwertregelung zur Querstabilisierung des Fahrzeugs 100 beitragen, z. B. bei einer Kurvenfahrt. Dabei können zwei Wegeventile 11, 13 bzw. 18, 19 zum Einsatz kommen. Trotz des Einsatzes zweier Wegeventile ist jedoch nur ein Spulenkörper zu deren Steuerung erforderlich, wobei beide Wegeventile ggf. parallel angesteuert werden. Diese Gestaltung erlaubt es, unter Gewährleistung der funktionalen Sicherheit, beide Wegeventile anzusteuern und zu überwachen, ohne dass hierfür jeweils eigene Wegeventilkabel und Endstufen der elektronischen Steuereinheit erforderlich wären. Hierdurch lässt sich die Ausfallsicherheit erhöhen und die Kosten verringern.

Die 2/2-Wegeventile 11, 13, 18, 19 bilden somit in Fig. 1 als Luftbalgventile Primär- und Sekundärventile I, II der Magnetventilanordnungen 120, 130. Repräsentativ auch für die Magnetventilanordnung 130 ist die Magnetventilanordnungen 120 mit Schaltzuständen in Fig. 2 gezeigt. Die Spulenkörper 7, 14 der Magnetteile der Magnetventilanordnungen 120, 130 dienen zur Ansteuerung des Pneumatikteils derselben - letzterer ist mittels der pneumatisch parallel geschalteten Primär- und Sekundärventile I, II gebildet.

In einer hier nicht gezeigten Ausführungsform kann auch wenigstens eine der ersten oder zweiten Achse A1, A2 mit einer Individualregelung aufbauend auf der Ausführungsform gemäß Fig. 1 realisiert werden. Auch dabei wird pro Achse nur ein einziger Spulenkörper 7, 14 als Aktuator benötigt wird, der von der Elektronik separat ansteuerbar und überwachbar ist. Die Wegeventile der Achse können optional separat angesteuert werden, so dass eine Einzelpunktregelung vorliegt. Damit lässt sich ein Geradestellen des Fahrzeugs 100 um die Längsachse ermöglichen, wodurch beispielsweise eine asymmetrische Beladung ausgeglichen werden kann.

Bei dem in Fig. 2 weiter im Detail dargestellten Ausführungsbeispiel ist nur die Magnetventilanordnung 120 der Fig. 1 in unterschiedlichen Schaltstellungen für eine Mittelwertregelung einer einzigen Achse gezeigt und erläutert. Hierbei sind für identische oder ähnliche Teile oder Teile identischer oder ähnlicher Funktion gleiche Bezugszeichen verwendet. Die Erläuterungen können in analoger Weise auch für die Magnetventilanordnung 130 der Fig. 1 gelten. Die Spulenkörper 7, 14 erlauben über eine Stromsteuerung die unabhängige Ansteuerung von jeweils zwei Wegeventilen 11 (Primärventil I), 13 (Sekundärventil II) bzw. 18 (Primärventil I), 19 (Sekundärventil II) über nur einen Spulenkörper 7 bzw. 14.

Die Magnetventilanordnung 120 ist mittels wenigstens einer Zweigleitung 350, 360 an die Pneumatikleitung 3 über die Galerieleitung 12 angeschlossen, wobei ein pneumatischer balgseitiger Anschluss Y1 des Primärventils I in einer ersten Zweigleitung 35 und ein pneumatischer balgseitiger Anschluss Y2 des Sekundärventils II in einer zweiten Zweigleitung 36 angeschlossen ist, wobei die erste Zweigleitung 35 und die zweite Zweigleitung 36 separate Zweigleitungen sind. Das Primärventil I und das Sekundärventil II sind in einer Parallelschaltung angeordnet, wobei ein pneumatischer galerieseitiger Anschluss X1 des Primärventils I an eine erste Zweigleitung 350 und ein pneumatischer galerieseitiger Anschluss X2 des Sekundärventils II an eine zweite Zweigleitung 360 angeschlossen ist - vorliegend ist die erste Zweigleitung 350 und die zweite Zweigleitung 360 separat an die Galerieleitung 12 angeschlossen. 10. Eine Steuereinheit 1 ist ausgebildet, in dem ersten und zweiten Luftbalg 43, 45 einen Druck gemäß einem Mittelwert des Drucks des ersten und zweiten Luftbalgs zu regeln - dazu können dem Primär- und Sekundärventil I, II der pneumatischen Parallelschaltung in der Magnetventilanordnung 120 gleiche Schaltzustände vorgegeben werden.

In Fig. 2 (a) ist ein erster Zustand gezeigt, bei dem der Spulenkörper 7 stromlos ist und beide Luftbälge 43, 45 abgesperrt sind. Die Wegeventile 11, 13 befinden sich hierbei in ihrer Sperrstellung.

In dem in Fig. 2 (b) gezeigten zweiten Zustand ist nur das Primärventil I geschaltet, d.h. das Wegeventil 11, so dass der Luftbalg 43, z.B. am Rad R1 links, be- oder entlüftet werden kann - dies auch nach Maßgabe der Schaltstellung des Wegeventils 22 und der durch die Druckluftversorgungsanlage 2 bereitgestellten Druckspeisung.

In dem in Fig. 2 (c) gezeigten dritten Zustand ist nur das Sekundärventil II geschaltet, d. h. das Wegeventil 13, während das Wegeventil 11 sperrt. Damit ist im dritten Zustand eine Be- oder Entlüftung des anderen Luftbalges 45, beispielsweise des Luftbalgs am Rad R2 rechts, möglich.

In dem in Fig. 2 (d) gezeigten vierten Zustand sind sowohl das Primärventil I als auch das Sekundärventil II, d. h. die Wegeventile 43, 45 geschaltet, so dass eine Be- oder Entlüftung beider Luftbälge 43, 45 gleichzeitig erfolgen kann.

Bei dem Ausführungsbeispiel gemäß Fig. 2 kann zwischen dem Zustand gemäß Fig. 2(a) und dem Zustand gemäß Fig. 2(d), ohne Stromregelung hin- und her geschaltet werden. Damit bietet sich das Konzept "Zweistufenmagnet in pneumatischer Parallelschaltung" für eine Mittelwertregelung an. Unter Anwendung einer Ansteuerung mit Stromregelung lässt sich additiv der Zustand gemäß Fig. 2(b) schalten, indem beispielsweise der von der Steuereinheit 1 über die Steuerleitung 6 zugeführte Strom so geregelt wird, dass der Spulenkörper 7 zwar das Wegeventil 11 bereits in die Durchgangsstellung schalten kann, die erzeugte Magnetkraft aber noch nicht ausreichend ist, auch das Wegeventil 13 aus dem Sperrzustand in den Durchgangszustand umzuschalten.

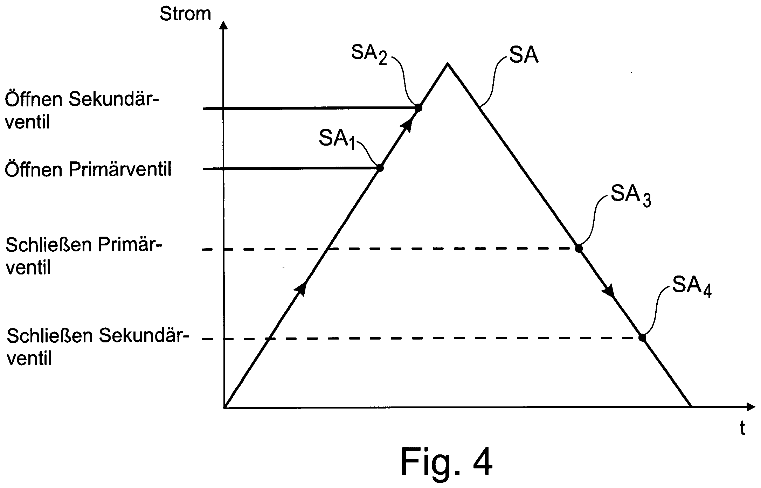

Zur Erzielung des Zustands gemäß Fig. 2(c) können neben einer Stromregelung auch konstruktive Maßnahmen getroffen sein, indem beispielsweise eine definierte Schalthysterese konstruktiv sichergestellt wird. Dies kann zu einem Schaltverhalten, wie es z.B. anhand von Fig. 4 erläutert ist, genutzt werden. Beispielsweise kann durch Stromregelung und die Schalthysterese erreicht werden, dass das Wegeventil 13 in die Offenstellung geschaltet bleibt, während das Wegeventil 11 wieder in die Sperrstellung zurückfällt - dies wie in Fig. 2 (c) gezeigt. Es kann auch unabhängig vom Durchschaltvorgang das Wegeventil 13 kontinuierlich in der Sperrstellung gehalten werden.

Mittels der in den Fig. 2 (b) und 2 (c) gezeigten Zustände lässt sich auch eine Rechts-/Links-Regelung erzielen, so dass die Luftbälge links und rechts unabhängig voneinander gesteuert und be- oder entlüftet werden können, wodurch beispielsweise ein durch eine asymmetrische Beladung hervorgerufener Schiefstand des Fahrzeuges ausgeglichen werden kann.

In Fig. 3 ist ein weiteres Ausführungsbeispiel gemäß einer zweiten Variante gezeigtwiederum bilden die dort gezeigten, auch als Primärventil 61 und Sekundärventil 64 bezeichneten Wegeventile 61, 64 je eine Magnetventilanordnung 120' oder 130'. Diese könnten z.B. anstelle der Magnetventilanordnung 120 oder 130 der Ausführungsform der Fig. 1 verwendet werden.

Vorliegend dient auch ein Spulenkörper 60 -wie bei der Ausführungsform der Fig. 1-von Primärventil I (Wegeventil 61) und Sekundärventil II (Wegeventil 64) als ein gemeinsamer und auf beide wirkender Spulenkörper 60 zur Steuerung der Schaltzustände derselben. Der Spulenkörper 60 der Fig. 3 ist Teil einer einen Magnetteil bildenden Spule der Magnetventilanordnung 120' , 130', die zur selektiv steuerbaren Schaltung eines Primärventils I und eines Sekundärventils II ausgelegt ist. Das Primärventil I ist als 2/2-Wegeventil 61 ausgelegt, das Sekundärventil II ist als 3/2-Wegeventil 64 ausgelegt. Letzteres Primärventil I und Sekundärventil II sind im Unterschied zur Ausführungsform der Fig. 1 im Rahmen des Doppelanker-Magnetventils pneumatisch in Reihe geschaltet. Das 2/2-Wegeventil 61 und 3/2-Wegeventil 64 sind in einer Reihenschaltung pneumatisch verbunden und nutzen beide einen für das Primär- und Sekundärventil I, II gemeinsamen pneumatischen galerieseitigen Anschluss der Magnetventilanordnung 120', 130' an dieselbe Zweigleitung 600. Die Zweigleitung 600 wiederum ist an die Galerieleitung 12 angeschlossen. Die gemeinsame Zweigleitung 600 führt also - ähnlich wie in Fig.1- zu einer dort gezeigten Galerieleitung 12.

Die Magnetventilanordnung 120', 130' ist mittels wenigstens einer Zweigleitung 600 an die Pneumatikleitung 3 über die Galerieleitung 12 angeschlossen, wobei ein pneumatischer balgseitiger Anschluss Y1 des Primärventils I in einer ersten Zweigleitung 600 und ein pneumatischer balgseitiger Anschluss Y2a, Y2b des Sekundärventils II in einer zweiten Zweigleitung 62, 63 angeschlossen ist, wobei die erste Zweigleitung 600 und die zweite Zweigleitung 62, 63 separate Zweigleitungen sind. Das Primärventil I und das Sekundärventil II sind in einer Reihenschaltung angeordnet, wobei ein pneumatischer galerieseitiger Anschluss X1, X2 des Primärventils I und Sekundärventils II der Magnetventilanordnung 120', 130' an dieselbe Zweigleitung 600 angeschlossen ist. Vorliegend ist dieselbe Zweigleitung 600 als einzige Zweigleitung 600 an die Galerieleitung 12 angeschlossen. Eine Steuereinheit 1 ist ausgebildet, in dem ersten und zweiten Luftbalg 65, 66 einen unterschiedlichen Druck zu regeln. Insbesondere sind dem Primär- und Sekundärventil I, II einer pneumatischen Reihenschaltung in einer Magnetventilanordnung 120', 130' unterschiedliche Schaltzustände vorgebbar.

Die in Fig. 3 gezeigte Ausführungsform ist für eine Achse A1 vorzugsweise mit Links-/Rechts-Regelung -bei Bedarf jedoch auch mit Mittelwertregelung- geeignet. Ein durch das Wegeventil 61 gebildetes Primärventil I ist insofern mit einem galerieseitigen Anschluss X1 und einem balgseitigen Anschluss Y1 direkt in der Zweigleitung 600 zur Führung von Druckluft angeschlossen. Das durch das Wegeventil 64 gebildete Sekundärventil II ist wiederum mit einem galerieseitigen Anschluss X2 direkt an dieselbe Zweigleitung 600 zur Führung von Druckluft angeschlossen. Dabei ist der galerieseitige Anschluss X2 des Sekundärventils II dem balgseitigen Anschluss Y1 des Primärventils I zugewandt - d.h. dieselbe Zweigleitung 600 verbindet den genannten balgseitigen und galerieseitigen Anschluss Y1, X2. Das durch das Wegeventil 64 gebildete Sekundärventil II weist darüberhinaus balgseitige Anschlüsse Y2a, Y2b zu Balgleitungen 62, 63 auf, die jeweils zu einem Luftbalg 65, 66 führen. Die gemeinsame Zweigleitung 600 dient also zugleich als Eingangsanschluss für das Wegeventil 64, das über zwei ausgangs angeordnete balgseitige Anschlüsse Y2a, Y2b und die Balgleitungen 62, 63 mit den Luftbälgen 65, 66 verbunden ist. Anstelle einer Balgleitung kann im Prinzip auch eine beispielsweise gemäß Fig. 1 gezeigte Leitung zu einem Druckluftspeicher 51 angeschlossen sein.

Bei einer solchen Ausführungsform können die in Fig. 3 gezeigten Komponenten 60 bis 66 an die Stelle der in Fig. 1 gezeigten Komponenten 7, 11, 13, 43, 45 treten und diese ersetzen. Alternativ oder zusätzlich können die in Fig. 3 gezeigten Komponenten 60 bis 66 auch an die Stelle der in Fig. 1 gezeigten Komponenten 14, 18, 19, 47, 49 treten und diese ersetzen. Die Luftbälge 65, 66 können mit Dämpferventilen und/oder Restdruckhalteventilen versehen sein, wie dies in Fig. 1 dargestellt ist.

In Fig. 3 (a) ist konkret eine Magnetventilanordnung 120', 130' in Form eines Doppelanker-Magnetventils mit in Reihe geschalteten Primärventil I (Wegeventil 61) und Sekundärventil II (Wegeventil 64) gezeigt - und zwar in einem Zustand dargestellt, bei dem der Spulenkörper 60 stromlos ist und die Magnetventilanordnung 120', 130' gesperrt ist. Zwar befindet sich das Wegeventil 64 in Durchlassstellung, wird jedoch durch das vorgeschaltete Wegeventil 61 gesperrt. Beide Luftbälge 65, 66 werden daher weder belüftet noch entlüftet.

In Fig. 3 (b) ist die Magnetventilanordnung 120', 130' in einem zweiten Zustand gezeigt, bei dem nur das Wegeventil 61 in Durchlassrichtung umgeschaltet ist. Da das Wegeventil 64 in seiner Stellung verbleibt, wird der Luftbalg 66, d.h. zum Beispiel der Luftbalg rechts, be- und entlüftet. Der Luftbalg 65, zum Beispiel der Luftbalg links, bleibt gesperrt.

In Fig. 3 (c) ist die Magnetventilanordnung 120' 130' in einem dritten Zustand gezeigt, bei dem sowohl das Wegeventil 61 als auch das Wegeventil 64 geschaltet sind. In dieser Schaltstellung befindet sich das Wegeventil 61 in Durchlassstellung, wie auch schon in Fig. 3 (b), wobei nun aber auch das Wegeventil 64 so umgeschaltet ist, dass der Luftbalg 66 nun gesperrt ist, aber der Luftbalg 65 über das den Luftbalg 65 mit der Balgleitung 63 verbindende Wegeventil 64 be- und entlüftet wird. Bei dem in Fig. 3 gezeigtem Ausführungsbeispiel werden die drei Zustände mittels Stromregelung geschaltet. Ein gleichzeitiges Be- oder Entlüften beider Luftbälge 65, 66 ist nicht vorgesehen. Eine Reihenschaltung von Primär- und Sekundärventil I, II in einer Magnetventilanordnung 120', 130' bietet sich aber besonders für eine Links-/Rechts-Regelung an.

In abgewandelter Ausgestaltung der Erfindung ist es auch möglich eine Magnetventilanordnung wie oben beschrieben als ein Doppelanker-Magnetventil für eine Achse mit einer pneumatischen Parallelschaltung von Primär-und Sekundärventil mit optionaler Mittelwertregelung - zum Beispiel in der Ausführungsform der Fig. 1 oder Fig. 2 - oder als ein Doppelanker-Magnetventil für diese Achse mit einer pneumatischen Reihenschaltung von Primär-und Sekundärventil - zum Beispiel in der Ausführungsform der Fig. 3 - mit zwei konventionellen Magnetventilen für eine andere weitere Achse zu kombinieren. Auch hier wird vorteilhaft durch ein Doppelanker-Magnetventil für wenigstens eine Achse der entsprechende Schaltungs- und Verdrahtungsaufwand sowie Überwachungsaufwand verringert.

Durch den Einsatz eines Doppelanker-Magnetventils oder einer anderen Magnetventilanordnung gemäß der Erfindung mit Primärventil I und Sekundärventil II, z. B. in Parallelschaltung oder Reihenschaltung, lässt sich grundsätzlich ein Spulenkörper einsparen, wodurch sich der Aufwand für die Fahrzeugverkabelung und die elektronische Steuereinheit verringert.
Die Magnetventilanordnung 120, 13, 120', 130' kann, muss aber nicht, beispielsweise jeweils als Doppelankerventil mit einem Spulenkörper 7, 14, 60 versehen sein, durch dessen Erregung die jeweiligen Anker gezielt betätigt und damit gezielte Schaltstellungen der beiden Wegeventile eingestellt werden können. Ein solches Doppelankermagnetventil kann beispielsweise zwei in einer gemeinsamen oder separaten Ankerführungsanordnung angeordnete und optional jeweils mit einer Feder belastete Magnetanker (Primäranker und Sekundäranker) aufweisen, die durch einen gemeinsamen Spulenkörper selektiv oder gemeinsam betätigbar sind. Bei stromlosem Spulenkörper können sich die beiden Anker jeweils in ihrer, beispielsweise durch die Federbelastung festgelegten Grundstellung befinden, während bei Einspeisung entsprechender Ströme in den Spulenkörper der erste und/oder zweite Anker aktiviert und in die andere Wegeventilschaltstellung umgeschaltet werden kann. Durch Stromregelung lassen sich diese Schaltstellungen gezielt definieren und erreichen.
Fig. 4 zeigt beispielhaft eine symbolische Darstellung einer Steuerstromamplitude für die Schaltung eines Doppelankermagnetventils -allgemein für eine Magnetventilanordnung 120, 120' ,130, 130'- in unterschiedlichen Schaltzuständen, wie sie beispielsweise in Fig. 2 und Fig. 3 gezeigt sind. Die Stromamplitude SA ist vorliegend über einen zeitlichen Verlauf t dargestellt. Der zeitliche Verlauf kann beispielsweise genutzt werden, um einen exakten Schaltpunkt eines Primärventils I und/oder eines Sekundärventils II einzulernen. Dies kann beispielsweise im Rahmen eines Diagnosejobs für eine Fahrzeugsteuerung ECU geschehen.
Die Grafik der Fig. 4 zeigt eine geregelte Stromamplitude SA. In einem Anfangszustand einer Magnetventilanordnung ist das Primärventil I geschlossen und das Sekundärventil II geschlossen. (z.B. Fig.2 (a) - Luftbälge 43, 45 getrennt von Galerieleitung 12).
Bei Überschreiten einer ersten Stromamplitude SA1 geht aufgrund der Einstellung einer Wegeventilfeder des Primärventils I (z. B. erste Wegeventile 11, 18 der Fig. 1 und Fig.2 oder Wegeventil 61 der Fig.3) das Primärventil I von einem stromlos geschlossenen Zustand in einen geöffneten Schaltzustand über, d.h. es wird umgeschaltet. In diesem Schaltzustand einer Magnetventilanordnung ist das Primärventil I offen und das Sekundärventil II geschlossen (z.B. Fig.2 (b) - Luftbalg 43 verbunden mit Galerieleitung 12, Luftbalg 45 getrennt von Galerieleitung 12)

Bei Überschreitung einer zweiten, vorliegend höheren, Stromamplitude SA2 schaltet auch das Sekundärventil II (z. B. zweite Wegeventile 13, 19 der Fig. 1 und Fig.2), d. h. es geht in diesem Beispiel von einem stromlos geschlossenen Zustand in einen Schaltzustand über, welcher dem offenen Zustand des Sekundärventils II entspricht. In diesem Schaltzustand einer Magnetventilanordnung ist das Primärventil I offen und das Sekundärventil II offen (z.B. Fig.2(d) - Luftbälge 43, 45 verbunden mit Galerieleitung 12)

Grundsätzlich können in einer abgewandelten Ausführungsform die stromlosen und bestromten Schaltzustände auch genau umgekehrt gewählt sein; d.h. Primär- und/oder Sekundärventil können für einen stromlos offenen und bestromt geschlossenen Schaltzustand ausgelegt sein.

Vorliegend - für die stromlos geschlossen ausgelegten Primär- und Sekundärventile I, II - schließt bei Reduzierung der Steuerstromamplitude, unter Berücksichtigung einer gewissen Hysterese, bei Unterschreitung einer dritten Stromamplitude SA3 zunächst das Primärventil wieder, d. h. das Primärventil geht nunmehr von dem bestromt offenen Zustand in einen bei geringerer Bestromung auftretenden, wiederum geschlossenen Schaltzustand über. In diesem Schaltzustand einer Magnetventilanordnung ist das Primärventil I geschlossen und das Sekundärventil II offen (z.B. Fig.2 (c) - Luftbalg 45 verbunden mit Galerieleitung 12, Luftbalg 43 getrennt von Galerieleitung 12)

Bei Unterschreitung einer vierten, vorliegend niedrigeren Stromamplitude SA4 geht schließlich das Sekundärventil II vom bestromt geöffneten Schaltzustand wieder in den stromlos geschlossenen Schaltzustand über. Ein entsprechendes Stromsteuermodul kann in einer Steuereinheit 1 vorgesehen sein, um die Schaltzustände SA1 bis SA4 festzulegen.

Die vorgenannte Schaltabfolge ergibt sich unabhängig von einer Reihen- oder Parallelschaltung der einer Magnetventilanordung 120, 130 bzw. 120' , 130'.

Allerdings ist im Unterschied zu den vorgenannten Beispielen einer Parallelschaltung von Primär- und Sekundärventil I, II in einer Magnetventilanordung 120, 130 der Fig.2(a)-(d)- bei einer Reihenschaltung von Primär- und Sekundärventil I, II in einer Magnetventilanordung 120', 130' eine durchströmbare pneumatische Verbindung der Galerieleitung 12 zu den Bälgen anders zugeordnet.

Bei einer Reihenschaltung von Primär- und Sekundärventil I, II in einer Magnetventilanordung 120', 130' ist bei geschlossenem Primärventil (vor Überschreiten der Stromamplitude SA1 und nach Unterschreiten der Stromamplitude SA3) keiner der Luftbälge mit der Galerieleitung 12 verbunden (Fig. 3 (a)). Ein Absperren vom linken zum rechten Luftbalg (oder umgekehrt) bei Nicht-Ansteuerung ist z.B. bei einer Reihenschaltung der vorgenannten Art sichergestellt, wodurch z. B. eine Querstabilisierung durch die Tragfedern bei Kurvenfahrt gewährleistet wird. Dieser Effekt ist auch bei der Ausgestaltung gemäß Fig. 3 gegeben.

Bei einer Reihenschaltung von Primär- und Sekundärventil I, II in einer Magnetventilanordung 120', 130' ist bei offenem Primärventil (nach Überschreiten der Stromamplitude SA1 und vor Unterschreiten der Stromamplitude SA3) entweder der Luftbalg 65 oder der Luftbalg 66 mit der Galerieleitung verbunden. Vor Überschreiten der Stromamplitude SA2 ist der Luftbalg 66 mit der Galerieleitung verbunden (Fig. 3 (b)). Nach Überschreiten der Stromamplitude SA2 ist der Luftbalg 65 mit der Galerieleitung verbunden (Fig. 3 (c)). Eine Links-/Rechts-Regelung wird bei der in Fig. 3 gezeigten Reihenschaltung optional durch Stromregelung und entsprechende Konstruktion erzielt.

Die Schaltströme der einzelnen Schaltstufen können in individuellen Lernschritten justiert werden. Ein Einlernen der so beschriebenen Stromamplituden SA1, SA2, SA3, SA4 als relevante Schaltpunkt für einen Ein/Aus-Schaltzustandsübergang von Primärventil I (z. B. erste Wegeventile 11, 18 der Fig. 1 und Fig.2 oder Primärventil 61 der Fig.3) bzw. Sekundärventil II (z. B. zweite Wegeventile 13, 19 der Fig. 1 und Fig.2 oder Sekundärventil 64 der Fig.3) kann bei Inbetriebnahme des Fahrzeugs oder auch nur nach einem Komponententausch erfolgen. In der Tat ist eine exakte Feststellung eines Bewegungszeitpunkts eines Wegeventilankers, nämlich eines Primärankers bzw. Sekundärankers, für ein Primär- bzw. Sekundärventil nicht ohne Weiteres erkennbar. Durch Einlernen der Schaltpunkte ist jedoch ein exaktes Schalten des Primärventils und des Sekundärventils in einer Doppelankermagnetventilanordnung 120, 130, 120', 130' ermöglicht. Eine Einlernprozedur kann vorteilhaft als Diagnosejob in der Fahrzeugsteuerung ECU in einem Modul zur Stromregelung vorgesehen sein, d.h. in der ECU vorgehalten werden. Ein möglicher Ablauf kann folgender sein:
1. Bei Stromamplitude größer SA2: Primärventil I und Sekundärventil II durchschalten und Luftbälge auf einen Druck von z. B. 6 bar befüllen.
2. Bei Stromamplitude kleiner SA4: Primärventil I und Sekundärventil II ausschalten und in den Stromlos-Zustand versetzen.
3. Galerieleitung 12 einmalig entlüften und Druck mittels Drucksensor 26 messen.
4. Die Stromamplitude SA für Primärventil I und Sekundärventil II langsam erhöhen und den Druck mittels Drucksensor 26 kontinuierlich messen.
Als Ergebnis ist festzustellen, dass bei beginnendem Druckanstieg die Stromamplitude SA1 vom Primärventil erreicht wird, d.h. das Primärventil ist geöffnet und verbindet die entsprechende Zweigleitung mit dem entsprechenden Luftbalg, was sich durch den beginnenden Druckanstieg registrieren lässt.
5. Galerieleitung 12 bei geöffnetem Primärventil auf z. B. 10 bar belüften.
6. Galerieleitung bei geöffnetem Primärventil entlüften und den Druck mittels Drucksensor 26 kontinuierlich messen.
7. Stromamplitude SA reduzieren und den Druck mittels Drucksensor 26 kontinuierlich messen.
Als Ergebnis wird bei nicht weiter abfallendem Druck die Stromamplitude SA3 des Primärventils I erreicht. Ein nicht weiter abfallender Druck ergibt sich als Ergebnis des Übergangs des Primärventils I vom offenen Schaltzustand in den geschlossenen Schaltzustand.
Durch 4. und 7. werden die Stromamplituden SA1, SA3 der Schaltströme des Primärventils ermittelt.
8. bei geschalteter Stromamplitude SA1 und die Galerieleitung 12 und den damit über das Primärventil I verbundenen Luftbalg einmalig auf z. b. 1 bar entlüften.
9. Im Weiteren wird die Stromamplitude SA weiter erhöht und der Druck mittels Drucksensor 26 kontinuierlich gemessen. Wird ein Druckanstieg beobachtet, ist die Stromamplitude SA2 zum Einschalten des Sekundärventils II erreicht. Da das Sekundärventil II öffnet, macht sich dies durch den Anstieg bemerkbar. Der Druckanstieg ist begründet durch die über offenes Primär- und Sekundärventil I, II miteinander verbundenen Luftbälge.

Die Stromamplitude SA4 muss nicht explizit ermittelt werden, da das Schließen von Primär- und Sekundärventil I, II einfach durch Abschalten der Stromamplitude SA erreicht werden kann. Die auf diese Weise exakt ermittelbaren Stromamplituden SA1 bis SA4 für Schaltpunkte können für den weiteren optimierten Funktionsbetrieb des Primärventils und Sekundärventils genutzt werden.

### Bezuaszeichenliste (Bezuaszeichenliste ist Bestandteil der Beschreibung)

- 1: Steuereinheit
- 2: Druckluftversorgungsanlage
- 3: Pneumatikleitung
- 4, 5, 6, 10, 15: Steuerleitung
- 7: Spulenkörper
- 8, 9, 16, 17: Verbindung
- 11: Wege-Ventil
- 12: Galerieleitung
- 13: Wege-Ventil
- 14: Spulenkörper
- 18: Wege-Ventil
- 19: Wege-Ventil
- 20: Druckluftleitung
- 21: Spulenkörper
- 22: Wege-Ventil
- 23, 24, 25, 27, 28, 29, 30: Steuerleitung
- 26: Drucksensor
- 31, 32, 33, 34: Sensor
- 35, 36, 37, 38: Zweigleitung
- 39, 40, 41, 42: Restdruckhalteventil
- 43, 45, 47, 49: Luftbalg
- 44, 46, 48, 50: Dämpferventil
- 51: Druckluftspeicher
- 52, 53 ,54, 55: Steuerleitung
- 60: Spulenkörper
- I, II: Primärventil, Sekundärventil
- 62, 63: Balgleitung
- 61, 64: Wegeventil
- 65, 66: Luftbalg
- 100: Fahrzeug
- 110: Luftfederanlage
- 120, 120',: Magnetventilanordnung
- 130, 130': Magnetventilanordnung
- 200: Pneumatikanlage
- 210: pneumatisches System
- 350, 360, 370, 380: Zweigleitung
- 600: Gemeinsame Zweigleitung
- SA1, SA2, SA3, SA4: Stromamplitude
- A1, A2: erste Achse, zweite Achse
- R1, R2, R3, R4: Rad
- X1, X2: Galerieseitiger Anschluss des Primär-bzw. Sekundärventils
- Y1, Y2, Y2a, Y2b: Balgseitiger Anschluß des Primär- bzw. Sekundärventils

## Patentansprüche

1. Luftfederanlage (110) für ein Fahrzeug (100) mit einer zum Betrieb mit einer Druckluftversorgungsanlage (2) eingerichteten Pneumatikanlage (200), die aufweist:
- eine Pneumatikleitung (3) mit einem Anschluss zur Druckluftversorgungsanlage (2),
- eine Anzahl von Luftbälgen, wobei ein Luftbalg (43, 45, 47, 49) über ein steuerbares Wegeventil (11, 13, 18, 19) in Form eines Magnetventils an die Pneumatikleitung (3) angeschlossen ist, und wobei
- der Luftbalg (43, 45, 47, 49) abhängig von einem Schaltzustand des steuerbaren Wegeventils (11, 13, 18, 19) befüllbar oder entlüftbar ist,
**dadurch gekennzeichnet, dass**
- ein erstes Wegeventil (11, 18) und ein zweites Wegeventil (13, 19) eine steuerbare Magnetventilanordnung (120, 130, 120', 130') bilden, wobei das erste Wegeventil (11, 18) ein Primärventil (I) und das zweite Wegeventil (13, 19) ein Sekundärventil (II) der Magnetventilanordnung (120, 130, 120', 130') bildet,
- ein erster Luftbalg (43, 47) und ein zweiter Luftbalg (45, 49) der Magnetventilanordnung (120, 130, 120', 130') zugeordnet und abhängig von einem Schaltzustand des Primärventils (I) und des Sekundärventils (II) befüllbar oder entlüftbar ist, und wobei
- das Primärventil (I) und das Sekundärventil (II) mit einem beiden gemeinsamen auf beide wirkenden Steuermittel der Magnetventilanordnung (120, 130, 120', 130') steuerbar ist.

2. Luftfederanlage nach Anspruch 1, **dadurch gekennzeichnet, dass** ein gemeinsamer auf das Primär- und das Sekundärventil (I, II) wirkender Magnetteil das gemeinsame Steuermittel bildet, insbesondere einen auf Primär- und Sekundärventil (I, II) wirkenden gemeinsamen Spulenkörper (7, 14, 60) und/oder eine gemeinsame Steuerleitung (5, 6) als gemeinsames Steuermittel aufweist.

3. Luftfederanlage (110) nach Anspruch 1 oder 2, **dadurch gekennzeichnet, dass** die Magnetventilanordnung (120, 130, 120', 130') in Form eines Doppelanker-Magnetventils gebildet ist.

4. Luftfederanlage (110) nach einem der Ansprüche 1 bis 3, **dadurch gekennzeichnet, dass** das Primär- und das Sekundärventil (I, II) als ein 2/2-Wegeventil gebildet ist oder das Primärventil (I) als ein 2/2-Wegeventil und das Sekundärventil (II) als ein 3/2-Wegeventil gebildet ist.

5. Luftfederanlage (110) nach einem der Ansprüche 1 bis 4, **dadurch gekennzeichnet, dass** die Pneumatikanlage (200) eine Galerieleitung (12) aufweist, die an die Pneumatikleitung (3) angeschlossen ist und wobei der Luftbalg (43, 45, 47, 49) über eine Zweigleitung (35, 36, 37, 38) an die Galerieleitung (12) angeschlossen ist.

6. Luftfederanlage (110) nach einem der Ansprüche 1 bis 5, **dadurch gekennzeichnet, dass** ein erster Luftbalg (43, 47) an eine erste Zweigleitung (35, 37) und ein zweiter Luftbalg (45, 49) an eine zweite Zweigleitung (36, 38) angeschlossen ist.

7. Luftfederanlage nach einem der Ansprüche 1 bis 6, **dadurch gekennzeichnet, dass** die Pneumatikanlage (200) einen Druckluftspeicher (51), aufweist, die über ein weiteres steuerbares Wegeventil (22) in Form eines Magnetventils an die Pneumatikleitung (3) angeschlossen ist, und wobei der Druckluftspeicher (51) abhängig von einem Schaltzustand des steuerbaren Wegeventils (22) befüllbar oder entlüftbar ist, wobei das weitere Wegeventil (22) Teil der Magnetventilanordnung (120, 130, 120', 130') ist.

8. Luftfederanlage (110) nach einem der Ansprüche 1 bis 7, **dadurch gekennzeichnet, dass** die Magnetventilanordnung (120, 130, 120', 130') mittels wenigstens einer Zweigleitung (350, 360, 370, 380, 600) an die Pneumatikleitung (3), insbesondere Galerieleitung (12), angeschlossen ist und wobei ein pneumatischer balgseitiger Anschluss (Y1) des Primärventils (I) in einer ersten Zweigleitung (35, 37, 600) und ein pneumatischer balgseitiger Anschluss (Y2, Y2a, Y2b) des Sekundärventils (II) in einer zweiten Zweigleitung (36, 38, 62, 63) angeschlossen ist, wobei die erste Zweigleitung (35, 37, 600) und die zweite Zweigleitung (36, 38, 62, 63) separate Zweigleitungen sind.

9. Luftfederanlage (110) nach einem der Ansprüche 1 bis 8, **dadurch gekennzeichnet, dass** das Primärventil (I) und Sekundärventil (II) in einer Parallelschaltung angeordnet sind, wobei ein pneumatischer galerieseitiger Anschluss (X1) des Primärventils (I) an eine erste Zweigleitung (350, 370) und ein pneumatischer galerieseitiger Anschluss (X2) des Sekundärventils (II) an eine zweite Zweigleitung (360, 380) angeschlossen ist, insbesondere die erste Zweigleitung (350, 370) und die zweite Zweigleitung (360, 380) separat an die Galerieleitung (12) angeschlossen sind.

10. Luftfederanlage (110) nach einem der Ansprüche 1 bis 9, **dadurch gekennzeichnet, dass** eine Steuereinheit (1) ausgebildet ist, in dem ersten und zweiten Luftbalg (43, 45) einen Druck gemäß einem Mittelwert des Drucks des ersten und zweiten Luftbalgs zu regeln, insbesondere dem Primär- und Sekundärventil (I, II) einer pneumatischen Parallelschaltung in einer Magnetventilanordnung (120, 130) gleiche Schaltzustände vorzugeben.

11. Luftfederanlage (110) nach einem der Ansprüche 1 bis 8, **dadurch gekennzeichnet, dass** das Primärventil (I) und Sekundärventil (II) in einer Reihenschaltung angeordnet sind, wobei ein pneumatischer galerieseitiger Anschluss (X1, X2) des Primärventils (I) und Sekundärventils (II) der Magnetventilanordnung (120', 130') an dieselbe Zweigleitung (600) angeschlossen ist, insbesondere dieselbe Zweigleitung (600) als einzige Zweigleitung (600) an die Galerieleitung (12) angeschlossen ist.

12. Luftfederanlage (110) nach einem der Ansprüche 1 bis 9 oder 11, **dadurch gekennzeichnet, dass** eine Steuereinheit (1) ausgebildet ist, in dem ersten und zweiten Luftbalg (65, 66) einen unterschiedlichen Druck zu regeln, insbesondere dem Primär-und Sekundärventil (I, II) einer pneumatischen Reihenschaltung in einer Magnetventilanordnung (120', 130') unterschiedliche Schaltzustände vorzugeben.

13. Fahrzeug (100) mit wenigstens zwei Achsen (A1, A2), und einer Luftfederanlage (110) nach einem der Ansprüche 1 bis 12, **dadurch gekennzeichnet, dass** der erste Luftbalg (43, 47) und der zweite Luftbalg (45, 49) an einer der ersten oder zweiten Achse (A1, A2) zur Bildung je einer Luftfeder angeordnet ist.

14. Verfahren zum Betrieb einer eine Pneumatikanlage (200) aufweisenden Luftfederanlage (110) nach einem der Ansprüche 1 bis 12 für ein Fahrzeug (100), die zum Betrieb mittels einer Druckluftversorgungsanlage (2) eingerichtet ist und die aufweist:
- eine Pneumatikleitung (3) mit einem Anschluss zur Druckluftversorgungsanlage (2),
- eine Anzahl von Luftbälge, wobei ein Luftbalg (43, 45, 47, 49), über ein steuerbares Wegeventil (11, 13, 18, 19) in Form eines Magnetventils an die Pneumatikleitung (3) angeschlossen ist, und wobei
- der Luftbalg abhängig von einem Schaltzustand des steuerbaren Wegeventils befüllt oder entlüftet wird,
**dadurch gekennzeichnet, dass**
- ein erstes Wegeventil (11, 18) und ein zweites Wegeventil (13, 19) eine steuerbare Magnetventilanordnung (120, 130, 120', 130') bilden, wobei das erste Wegeventil (11, 18) ein Primärventil (I) und das zweite Wegeventil (13, 19) ein Sekundärventil (II) der Magnetventilanordnung (120, 130, 120', 130') bildet,
- ein erster Luftbalg (43, 47) und ein zweiter Luftbalg (45, 49) der Magnetventilanordnung (120, 130, 120', 130') zugeordnet und abhängig von einem Schaltzustand des Primär- und Sekundärventils befüllt oder entlüftet wird, und wobei
- das Primärventil (I) und das Sekundärventil (II) mit einem beiden gemeinsamen auf beide wirkenden Steuermittel der Magnetventilanordnung (120, 130, 120', 130') gesteuert wird.

15. Verfahren nach Anspruch 14, **dadurch gekennzeichnet, dass** das Primärventil (I) und das Sekundärventil (II) der Magnetventilanordnung (120, 130, 120', 130') ausgebildet sind,
- in einem ersten Betriebsmodus zeitlich sequentiell mit einem über eine Stromamplitude (SA₁, SA₂, SA₃, SA₄) ansteigenden Steuerstrom aktiviert zu werden, insbesondere mit dem Primär- und Sekundärventil (I, II) in einer pneumatischen Reihenschaltung in der Magnetventilanordnung (120', 130'), oder
- in einem zweiten Betriebsmodus gleichzeitig mit einem über eine Stromamplitude (SA₁, SA₂, SA₃, SA₄) ansteigenden Steuerstrom aktiviert zu werden, insbesondere mit dem Primär- und Sekundärventil (I, II) in einer pneumatischen Parallelschaltung in der Magnetventilanordnung (120, 130).

## Claims

1. Air suspension installation (110) for a vehicle (100) having a pneumatic installation (200) designed for operation with a compressed air supply installation (2), which comprises:
- a pneumatic line (3) having a connection to the compressed air supply installation (2),
- a plurality of air bellows, wherein an air bellows (43, 45, 47, 49) is connected via a controllable control valve (11, 13, 18, 19) in the form of a solenoid valve to the pneumatic line (3), and wherein
- the air bellows (43, 45, 47, 49) can be pressurized or vented depending on a switching state of the controllable control valve (11, 13, 18, 19),
**characterized in that**
- a first control valve (11, 18) and a second control valve (13, 19) form a controllable solenoid valve assembly (120, 130, 120', 130'), wherein the first control valve (11, 18) forms a primary valve (I) and the second control valve (13, 19) forms a secondary valve (II) of the solenoid valve assembly (120, 130, 120', 130'),
- a first air bellows (43, 47) and a second air bellows (45, 49) of the solenoid valve assembly (120, 130, 120', 130') is each associated with and can be pressurized or vented depending on a switching state of the primary valve (I) and of the secondary valve (II), and wherein
- the primary valve (I) and the secondary valve (II) can each be controlled by a control means of the solenoid valve assembly (120, 130, 120', 130') common to both and acting on both.

2. Air suspension installation according to Claim 1, **characterized in that** a common magnetic part acting on the primary and the secondary valves (I, II) forms the common control means, in particular comprising a common coil body (7, 14, 60) acting on a primary and secondary valve (I, II) and/or a common control line (5, 6) as a common control means.

3. Air suspension installation (110) according to Claim 1 or 2, **characterized in that** the solenoid valve assembly (120, 130, 120', 130') is in the form of a dual-armature solenoid valve.

4. Air suspension installation (110) according to any one of Claims 1 to 3, **characterized in that** the primary and the secondary valves (I, II) are each in the form of a 2/2-way valve or the primary valve (I) is in the form of a 2/2-way valve and the secondary valve (II) is in the form of a 3/2-way valve.

5. Air suspension installation (110) according to any one of Claims 1 to 4, **characterized in that** the pneumatic installation (200) comprises a gallery line (12), which is connected to the pneumatic line (3) and wherein the air bellows (43, 45, 47, 49) is connected via a branch line (35, 36, 37, 38) to the gallery line (12) .

6. Air suspension installation (110) according to any one of Claims 1 to 5, **characterized in that** a first air bellows (43, 47) is connected to a first branch line (35, 37) and a second air bellows (45, 49) is connected to a second branch line (36, 38).

7. Air suspension installation according to any one of Claims 1 to 6, **characterized in that** the pneumatic installation (200) comprises a compressed air reservoir (51), which is connected via another controllable control valve (22) in the form of a solenoid valve to the pneumatic line (3), and wherein the compressed air reservoir (51) can be pressurized or vented depending on a switching state of the controllable control valve (22), wherein the other control valve (22) is part of the solenoid valve assembly (120, 130, 120', 130').

8. Air suspension installation (110) according to any one of Claims 1 to 7, **characterized in that** the solenoid valve assembly (120, 130, 120', 130') is connected by means of at least one branch line (350, 360, 370, 380, 600) to the pneumatic line (3), in particular the gallery line (12), and wherein a bellows-side pneumatic connection (Y1) of the primary valve (I) is connected into a first branch line (35, 37, 600) and a bellows-side pneumatic connection (Y2, Y2a, Y2b) of the secondary valve (II) is connected into a second branch line (36, 38, 62, 63), wherein the first branch line (35, 37, 600) and the second branch line (36, 38, 62, 63) are separate branch lines.

9. Air suspension installation (110) according to any one of Claims 1 to 8, **characterized in that** the primary valve (I) and the secondary valve (II) are disposed in a parallel circuit, wherein a gallery-side pneumatic connection (X1) of the primary valve (I) is connected to a first branch line (350, 370) and a gallery-side pneumatic connection (X2) of the secondary valve (II) is connected to a second branch line (360, 380), in particular the first branch line (350, 370) and the second branch line (360, 380) being separately connected to the gallery line (12).

10. Air suspension installation (110) according to any one of Claims 1 to 9, **characterized in that** a control unit (1) is designed to control a pressure in the first and second air bellows (43, 45) according to an average value of the pressure of the first and second air bellows; in particular to specify the same switching states for the primary and secondary valves (I, II) of a pneumatic parallel circuit in a solenoid valve assembly (120, 130).

11. Air suspension installation (110) according to any one of Claims 1 to 8, **characterized in that** the primary valve (I) and the secondary valve (II) are disposed in a series circuit, wherein a gallery-side pneumatic connection (X1, X2) of the primary valve (I) and the secondary valve (II) of the solenoid valve assembly (120', 130') is each connected to the same branch line (600); in particular the same branch line (600) is connected to the gallery line (12) as a single branch line (600).

12. Air suspension installation (110) according to any one of Claims 1 to 9 or 11, **characterized in that** a control unit (1) is designed to control a different pressure in the first and second air bellows (65, 66), in particular to specify different switching states for the primary and secondary valves (I, II) of a pneumatic series circuit in a solenoid valve assembly (120', 130') .

13. Vehicle (100) having at least two axles (A1, A2) and an air suspension installation (110) according to any one of Claims 1 to 12, **characterized in that** the first air bellows (43, 47) and the second air bellows (45, 49) are respectively disposed on one of the first axle or the second axle (A1, A2) to form a pneumatic spring in each case.

14. Method for the operation of an air suspension installation (110) having a pneumatic installation (200) according to any one of Claims 1 to 12 for a vehicle (100), which is designed for operation by means of a compressed air supply installation (2) and which comprises:
- a pneumatic line (3) having a connection to the compressed air supply installation (2),
- a plurality of air bellows, wherein an air bellows (43, 45, 47, 49) is connected via a controllable control valve (11, 13, 18, 19) in the form of a solenoid valve to the pneumatic line (3), and wherein
- the air bellows is pressurized or vented depending on a switching state of the controllable control valve,
**characterized in that**
- a first control valve (11, 18) and a second control valve (13, 19) form a controllable solenoid valve assembly (120, 130, 120', 130'), wherein the first control valve (11, 18) forms a primary valve (I) and the second control valve (13, 19) forms a secondary valve (II) of the solenoid valve assembly (120, 130, 120', 130'),
- a first air bellows (43, 47) and a second air bellows (45, 49) of the solenoid valve assembly (120, 130, 120', 130') are associated with and are pressurized or vented depending on a switching state of the primary and secondary valve, and wherein
- the primary valve (I) and the secondary valve (II) are controlled by a control means of the solenoid valve assembly (120, 130, 120', 130') common to both and acting on both.

15. Method according to Claim 14, **characterized in that** the primary valve (I) and the secondary valve (II) of the solenoid valve assembly (120, 130, 120', 130') are designed
- to be activated time-sequentially in a first operating mode with a control current rising above a current amplitude (SA₁, SA₂, SA₃, SA₄), in particular with the primary and secondary valve (I, II) in a pneumatic series circuit in the solenoid valve assembly (120', 130'), or
- to be activated simultaneously in a second operating mode with a control current rising above a current amplitude (SA₁, SA₂, SA₃, SA₄), in particular with the primary and secondary valves (I, II) in a pneumatic parallel circuit in the solenoid valve assembly (120, 130).

## Revendications

1. Installation de ressort pneumatique (110) pour un véhicule (100) comprenant une installation pneumatique (200) prévue pour fonctionner avec une installation d'alimentation en air comprimé (2), qui présente :
- une conduite pneumatique (3) avec un raccord à l'installation d'alimentation en air comprimé (2),
- une pluralité de soufflets, un soufflet (43, 45, 47, 49) étant raccordé par le biais d'un distributeur commandable (11, 13, 18, 19) sous forme d'électrovanne à la conduite pneumatique (3), et
- le soufflet (43, 45, 47, 49) pouvant être rempli ou vidé en fonction d'un état de commutation du distributeur commandable (11, 13, 18, 19),
**caractérisée en ce que**
- un premier distributeur (11, 18) et un deuxième distributeur (13, 19) forment un agencement d'électrovannes commandables (120, 130, 120', 130'), le premier distributeur (11, 18) formant une soupape primaire (I) et le deuxième distributeur (13, 19) formant une soupape secondaire (II) de l'agencement d'électrovannes (120, 130, 120', 130'),
- un premier soufflet (43, 47) et un deuxième soufflet (45, 49) étant associés à l'agencement d'électrovannes (120, 130, 120', 130') et pouvant être rempli ou vidé en fonction d'un état de commutation de la soupape primaire (I) et de la soupape secondaire (II), et
- la soupape primaire (I) et la soupape secondaire (II) pouvant être commandées avec un moyen de commande de l'agencement d'électrovannes (120, 130, 120', 130') commun aux deux et agissant sur les deux.

2. Installation de ressort pneumatique selon la revendication 1, **caractérisée en ce qu'**une partie magnétique agissant en commun sur la soupape primaire et la soupape secondaire (I, II) forme le moyen de commande commun, en particulier présente un corps de bobine commun (7, 14, 60) agissant sur la soupape primaire et la soupape secondaire (I, II) et/ou une conduite de commande commune (5, 6) en tant que moyen de commande commun.

3. Installation de ressort pneumatique (110) selon la revendication 1 ou 2, **caractérisée en ce que** l'agencement d'électrovannes (120, 130, 120', 130') est réalisé sous la forme d'une électrovanne à double induit.

4. Installation de ressort pneumatique (110) selon l'une quelconque des revendications 1 à 3, **caractérisée en ce que** la soupape primaire et la soupape secondaire (I, II) sont réalisées sous forme de soupapes à 2/2 voies ou la soupape primaire (I) est réalisée sous forme de soupape à 2/2 voies et la soupape secondaire (II) est réalisée sous forme de soupape à 3/2 voies.

5. Installation de ressort pneumatique (110) selon l'une quelconque des revendications 1 à 4, **caractérisée en ce que** l'installation pneumatique (200) présente une conduite de galerie (12) qui est raccordée à la conduite pneumatique (3), le soufflet (43, 45, 47, 49) étant raccordé à la conduite de galerie (12) par le biais d'une conduite de branchement (35, 36, 37, 38).

6. Installation de ressort pneumatique (110) selon l'une quelconque des revendications 1 à 5, **caractérisée en ce qu'**un premier soufflet (43, 47) est raccordé à une première conduite de branchement (35, 37) et un deuxième soufflet (45, 49) est raccordé à une deuxième conduite de branchement (36, 38).

7. Installation de ressort pneumatique selon l'une quelconque des revendications 1 à 6, **caractérisée en ce que** l'installation pneumatique (200) présente un accumulateur d'air comprimé (51) qui est raccordé par le biais d'un distributeur commandable supplémentaire (22) sous la forme d'une électrovanne à la conduite pneumatique (3), et l'accumulateur d'air comprimé (51) pouvant être rempli ou vidé en fonction d'un état de commutation du distributeur commandable (22), le distributeur supplémentaire (22) faisant partie de l'agencement d'électrovannes (120, 130, 120', 130').

8. Installation de ressort pneumatique (110) selon l'une quelconque des revendications 1 à 7, **caractérisée en ce que** l'agencement d'électrovannes (120, 130, 120', 130') est raccordé à la conduite pneumatique (3), en particulier à la conduite de galerie (12) au moyen d'au moins une conduite de branchement (350, 360, 370, 380, 600), et un raccordement pneumatique côté soufflet (Y1) de la soupape primaire (I) étant raccordé dans une première conduite de branchement (35, 37, 600) et un raccordement pneumatique côté soufflet (Y2, Y2a, Y2b) de la soupape secondaire (II) étant raccordé dans une deuxième conduite de branchement (36, 38, 62, 63), la première conduite de branchement (35, 37, 600) et la deuxième conduite de branchement (36, 38, 62, 63) étant des conduites de branchement séparées.

9. Installation de ressort pneumatique (110) selon l'une quelconque des revendications 1 à 8, **caractérisée en ce que** la soupape primaire (I) et la soupape secondaire (II) sont disposées suivant un montage en parallèle, un raccord pneumatique du côté de la galerie (X1) de la soupape primaire (I) étant disposé au niveau d'une première conduite de branchement (350, 370) et un raccord pneumatique du côté de la galerie (X2) de la soupape secondaire (II) étant disposé au niveau d'une deuxième conduite de branchement (360, 380), en particulier la première conduite de branchement (350, 370) et la deuxième conduite de branchement (360, 380) étant raccordées séparément à la conduite de galerie (12).

10. Installation de ressort pneumatique (110) selon l'une quelconque des revendications 1 à 9, **caractérisée en ce qu'**une unité de commande (1) est réalisée de manière à régler, dans le premier et le deuxième soufflet (43, 45), une pression en fonction d'une valeur moyenne de la pression du premier et du deuxième soufflet, en particulier de manière à prédéfinir pour la soupape primaire et la soupape secondaire (I, II) d'un branchement en pneumatique en parallèle dans un agencement d'électrovannes (120, 130), des états de commutation identiques.

11. Installation de ressort pneumatique (110) selon l'une quelconque des revendications 1 à 8, **caractérisée en ce que** la soupape primaire (I) et la soupape secondaire (II) sont disposées suivant un branchement en série, un raccord pneumatique du côté de la galerie (X1, X2) de la soupape primaire (I) et de la soupape secondaire (II) de l'agencement d'électrovannes (120', 130') étant raccordé à la même conduite de branchement (600), en particulier la même conduite de branchement (600) étant raccordée en tant que conduite de branchement unique (600) à la conduite de galerie (12) .

12. Installation de ressort pneumatique (110) selon l'une quelconque des revendications 1 à 9 ou 11, **caractérisée en ce qu'**une unité de commande (1) est réalisée de manière à régler une pression différente dans le premier et le deuxième soufflet (65, 66), en particulier de manière à prédéfinir pour la soupape primaire et la soupape secondaire (I, II) d'un branchement en série pneumatique dans un agencement d'électrovannes (120', 130'), des états de commutation différents.

13. Véhicule (100) comprenant au moins deux axes (A1, A2) et une installation de ressort pneumatique (110) selon l'une quelconque des revendications 1 à 12, **caractérisé en ce que** le premier soufflet (43, 47) et le deuxième soufflet (45, 49) sont disposés au niveau de l'un du premier ou du deuxième axe (A1, A2) pour former chacun un ressort pneumatique.

14. Procédé pour faire fonctionner une installation de ressort pneumatique (110) selon l'une quelconque des revendications 1 à 12 pour un véhicule (100), présentant une installation pneumatique (200), qui est prévue pour un fonctionnement au moyen d'une installation d'alimentation en air comprimé (2) et qui présente :
- une conduite pneumatique (3) avec un raccord à l'installation d'alimentation en air comprimé (2),
- une pluralité de soufflets, un soufflet (43, 45, 47, 49) étant raccordé par le biais d'un distributeur commandable (11, 13, 18, 19) sous la forme d'une électrovanne à la conduite pneumatique (3), et
- le soufflet étant rempli ou vidé en fonction d'un état de commutation du distributeur commandable,
**caractérisé en ce que**
- un premier distributeur (11, 18) et un deuxième distributeur (13, 19) forment un agencement d'électrovannes commandable (120, 130, 120', 130'), le premier distributeur (11, 18) formant une soupape primaire (I) et le deuxième distributeur (13, 19) formant une soupape secondaire (II) de l'agencement d'électrovannes (120, 130, 120', 130'),
- un premier soufflet (43, 47) et un deuxième soufflet (45, 49) étant associés à l'agencement d'électrovannes (120, 130, 120', 130') et étant rempli ou vidé en fonction d'un état de commutation de la soupape primaire et de la soupape secondaire, et
- la soupape primaire (I) et la soupape secondaire (II) étant commandées avec un moyen de commande de l'agencement d'électrovannes (120, 130, 120', 130') commun aux deux et agissant sur les deux.

15. Procédé selon la revendication 14, **caractérisé en ce que** la soupape primaire (I) et la soupape secondaire (II) de l'agencement d'électrovannes (120, 130, 120', 130') sont réalisées
- de manière à être activées dans un premier mode de fonctionnement séquentiellement dans le temps avec un courant de commande augmentant sur une amplitude de courant (SA₁, SA₂, SA₃, SA₄), en particulier avec la soupape primaire et la soupape secondaire (I, II) en branchement pneumatique en série dans l'agencement d'électrovannes (120', 130') ou
- de manière à être activées dans un deuxième mode de fonctionnement simultanément avec un courant de commande augmentant sur une amplitude de courant (SA₁, SA₂, SA₃, SA₄), en particulier avec la soupape primaire et la soupape secondaire (I, II) en branchement pneumatique en parallèle dans l'agencement d'électrovannes (120, 130).
